(19) Europäisches Patentamt / European Patent Office / Office européen des brevets

(11) **EP 3 972 006 B1**

(12) **EUROPEAN PATENT SPECIFICATION**

(45) Date of publication and mention of the grant of the patent:
**20.11.2024  Bulletin 2024/47**

(21) Application number: **20806020.2**

(22) Date of filing: **13.05.2020**

(51) International Patent Classification (IPC):
$H01M\ 50/489^{(2021.01)}$    $H01G\ 11/06^{(2013.01)}$
$H01G\ 11/50^{(2013.01)}$    $H01G\ 11/52^{(2013.01)}$
$H01G\ 11/56^{(2013.01)}$    $H01M\ 10/052^{(2010.01)}$
$H01M\ 10/0562^{(2010.01)}$    $H01M\ 10/0565^{(2010.01)}$
$H01M\ 10/0566^{(2010.01)}$    $H01M\ 10/058^{(2010.01)}$
$H01M\ 50/417^{(2021.01)}$    $H01M\ 50/42^{(2021.01)}$
$H01M\ 50/426^{(2021.01)}$    $H01M\ 50/446^{(2021.01)}$
$H01M\ 50/449^{(2021.01)}$    $H01M\ 50/457^{(2021.01)}$
$H01M\ 50/491^{(2021.01)}$    $H01M\ 10/0525^{(2010.01)}$
$H01M\ 50/443^{(2021.01)}$

(52) Cooperative Patent Classification (CPC):
H01G 11/52; H01G 11/06; H01G 11/50;
H01G 11/56; H01M 10/052; H01M 10/0525;
H01M 10/0562; H01M 10/0565; H01M 50/417;
H01M 50/42; H01M 50/426; H01M 50/443;
H01M 50/446; H01M 50/449; H01M 50/457;

(Cont.)

(86) International application number:
**PCT/JP2020/019143**

(87) International publication number:
**WO 2020/230825 (19.11.2020 Gazette 2020/47)**

(54) **SEPARATOR FOR ELECTRICITY STORAGE DEVICES, AND ELECTRICITY STORAGE DEVICE**

SEPARATOR FÜR ELEKTRIZITÄTSSPEICHERVORRICHTUNGEN UND ELEKTRIZITÄTSSPEICHERVORRICHTUNG

SÉPARATEUR POUR DISPOSITIFS DE STOCKAGE D'ÉLECTRICITÉ, ET DISPOSITIF DE STOCKAGE D'ÉLECTRICITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2019  JP 2019090772**
**17.12.2019  JP 2019227258**

(43) Date of publication of application:
**23.03.2022  Bulletin 2022/12**

(73) Proprietor: **Asahi Kasei Kabushiki Kaisha Tokyo 1000006 (JP)**

(72) Inventors:
• **NAKAZAWA, Masanori**
  **Tokyo 100-0006 (JP)**
• **HATAYAMA, Hiroshi**
  **Tokyo 100-0006 (JP)**

(74) Representative: **dompatent von Kreisler Selting Werner - Partnerschaft von Patent- und Rechtsanwälten mbB Deichmannhaus am Dom Bahnhofsvorplatz 1 50667 Köln (DE)**

(56) References cited:
**EP-A1- 3 716 359    WO-A1-2019/103011**

**JP-A- 2011 238 427**   **JP-A- 2013 109 866**
**JP-A- 2016 181 357**   **JP-B2- 4 961 654**
**US-A1- 2019 123 325**

(52)   Cooperative Patent Classification (CPC): (Cont.)
**H01M 50/489; H01M 50/491;** Y02E 60/10

**Description**

FIELD

The present invention relates to a separator for an electricity storage device (hereinafter also referred to simply as a "battery") used in the power generation element of an electricity storage device, and further, relates to a battery using the same, and a vehicle and battery-equipped equipment using the same.

BACKGROUND

Conventionally, in electricity storage devices, the power generation element, in which a separator for a battery is interposed between a positive electrode plate and a negative electrode plate, is impregnated with an electrolyte solution.

In these electricity storage devices, under conditions such as charging the device with a relatively high current at a relatively low temperature, lithium (Li) may precipitate on the negative electrode plate, and metallic Li may grow as dendrites (dendritic crystals) from this negative electrode plate. As such dendrites continue to grow, they either break through or penetrate the separator to reach the positive electrode plate, or approach the positive electrode plate, whereby the dendrites themselves may form a pathway and cause a short circuit. For example, during a nail penetration test of a lithium-ion secondary battery having a conventional single-layer separator consisting only of a substrate, if the nail penetrates the positive electrode, the separator, and the negative electrode, the electrons ($e^-$) in the nail move from the negative electrode to the positive electrode at a remarkably high speed, and the $Li^+$ ions also move from the negative electrode to the positive electrode at a remarkably high speed, whereby a large current flows and the amount of heat generated increases, which tends to impair safety.

Furthermore, in batteries, when the deposited dendrite (metallic Li) breaks, highly reactive metallic Li may be present in a state where it does not conduct with the negative electrode plate. When a large amount of dendrite or the metallic Li caused by the dendrite is present in the battery in this manner, if a short circuit is generated in another part, multiple parts are short-circuited, or heat is generated due to overcharging, the highly reactive metallic Li in the surroundings reacts, which tends to lead to a problem that heat is further generated, which also causes deterioration of the capacity of the battery.

In connection thereto, for example, Patent Literatures 1 to 3 describe that the growth of dendrites can be inhibited by forming a layer of a compound capable of occluding Li in an electricity storage device having positive and negative electrodes and a separator. US2019123325 A1 discloses a secondary battery that includes a metal ion receptor, which can absorb metal dendrites generated on the surface of a cathode while the battery is used.

EP 3 716 359 A1 discloses a separator for electricity storage devices, which comprises an active layer that contains a material (A) that is capable of absorbing lithium (Li), and which has an air permeability of 650 s/ 100 ml or less.

JP 2016 181357 A discloses a separator which enables the prevention of short circuit of positive and negative electrodes of an electrochemical device owing to lithium dendrite.

JP 4 961 654 B2 discloses a non-aqueous electrolyte secondary battery comprising a positive electrode, a negative electrode, a polymer membrane containing carbon powder or the like, and a separating membrane layer for preventing short-circuiting.

[CITATION LIST]

[PATENT LITERATURE]

[PTL 1] WO 2001/063687
[PTL 2] Japanese Unexamined Patent Publication (Kokai) No. 2010-219012
[PTL 3] Japanese Unexamined Patent Publication (Kokai) No. 2013-109866
[PTL 4] US 2019/ 123325 A1
[PTL 5] EP 3 716 359 A1
[PTL 6] JP 2016 181357 A
[PTL 7] JP 4 961654 B2

## SUMMARY

### [TECHNICAL PROBLEM]

However, in the separators described in Patent Literatures 1 to 3, the inhibition of dendrite growth is insufficient, and it is difficult to achieve both the output characteristics and cycle characteristics of the electricity storage device. Furthermore, in the separators described in Patent Literatures 1 to 3, there is still room for consideration not only regarding the safety of the electricity storage device such as the nail penetration test and the overcharge test, but also regarding the cycle characteristics when using a lithium (Li) metal negative electrode.

Thus, the present invention aims to provide a separator for an electricity storage device which can efficiently inhibit dendrites and which has improved safety, and in which the cycle characteristics can be improved when a Li metal negative electrode is used, and an electricity storage device including the same.

### [SOLUTION TO PROBLEM]

As a result of rigorous investigation, the present inventors have discovered that the above problems can be solved by providing the separator for an electricity storage device with an active layer, and adjusting the air permeability of the separator for an electricity storage device, and have completed the present invention. Specifically, the present invention is as defined in the appended claims.

### [ADVANTAGEOUS EFFECTS OF INVENTION]

According to the present invention, dendrites can be efficiently inhibited, safety can be improved, and cycle characteristics can be significantly improved when a lithium (Li) metal negative electrode is used.

## DESCRIPTION OF EMBODIMENTS

Though the embodiments (hereinafter referred to as the "present embodiment") of the present invention will be described in detail, the present invention is not limited to the present embodiment. In the present description, the upper and lower limits of each numerical range can be arbitrarily combined. Furthermore, the measurement of each numerical value can be carried out according to the method described in the Examples unless otherwise specified.

### <Separator>

The separator for an electricity storage device (hereinafter referred to as "separator") according to the present application comprises a material (A) capable of occluding lithium (Li) (hereinafter also referred to as "Li occluding material"), and comprises an active layer having a planar direction electrical resistivity of $10^5 \ \Omega \cdot cm$ (100,000 $\Omega \cdot cm$) or more, and the air permeability of the separator is 650 s/100 ml or less. In the present embodiment, the material (A) in the active layer contributes to the safety of the electricity storage device by efficiently inhibiting the growth of dendrites while ensuring ion permeability, and electricity storage devices comprising a separator having an air permeability of 650 s/100 ml or less tend to have good electrical characteristics and cycle characteristics. From the same viewpoints, the planar-direction electrical resistivity of the active layer is preferably $10^6 \ \Omega \cdot cm$ or more, and more preferably $10^7 \ \Omega \cdot cm$ or more, and the planar-direction electrical resistivity of the active layer has no upper limit and is preferably higher, whereby the phenomenon of trapping Li ions derived from the positive electrode during charging when Li dendrites reach the active layer tends to be inhibited. In the case of either a single-layer structure or a multi-layer structure, the air permeability of the separator, from the view point of electrical characteristics and cycle characteristics, is preferably 600 s/100 ml or less, 550 s/100 ml or less, 500 s/100 ml or less, 450 s/100 ml or less, or 400 s/100 ml or less, and further is 300 s/100 ml or less, and from the viewpoint of strength or safety, is preferably 30 s/100 ml or more, 100 s/100 ml or more, 120 s/100 ml or more, 140 s/100 ml or more, or 160 s/100 ml or more.

If desired, the separator may include a resin, an inorganic filler, and an organic filler in addition to the material (A) capable of occluding lithium (Li).

The structure of the separator according to the present embodiment can be single-layer (not according to the invention as claimed) or multi-layer. Generally, single-layer separators are composed of a substrate such as a polyolefin microporous membrane, and multi-layer separators comprise a substrate and at least one layer laminated on the substrate. The at least one layer may be, for example, insulating, adhesive, thermoplastic, inorganic porous, etc., and may be a pattern may be formed of a single membrane, or may be formed by dot coating, stripe coating, etc. In the present embodiment, the active layer comprising the material (A) capable of occluding lithium can not only constitute a single-layer separator as a substrate, but can also be arranged on the substrate of a laminate separator. Furthermore, the active layer can not only be formed as a single layer on the substrate, but can also include a pattern such as dot coating or stripe coating formed on the substrate.

Both surface layers of the separator have a contact angle of 1° or more and 60° or less with respect to propylene carbonate. "Both surface layers of the separator" refers to the surfaces of the membrane in the case of a membrane form having a single-layer structure (not according to the invention as claimed), and refers to the two exposed individual layers in the case of a laminate structure. When the contact angles of both surface layers with respect to propylene carbonate are within a range of 1° to 60°, the cycle characteristics of the electricity storage device comprising a lithium-ion conducting medium such as a separator and an electrolyte solution are excellent. In electricity storage devices, the active layer may change in volume due to lithium occlusion by the active layer, and the electrolyte solution retained in a vacant portion of a separator flows. When the contact angles with respect to propylene carbonate are 1° or more and 60° or less, since the flow of the electrolyte solution is smoothly carried out in response to the volume change as described above, it is considered that a suitable electrolyte solution amount is retained in the vacant portion of the separator, whereby the cycle characteristics thereof are excellent. Furthermore, when the concentration of the Li salt in the electrolyte solution is high, such as 1 mol/L or more, or 2 mol/L or more, or when the evaluation temperature is low such as 0 °C or less, the viscosity of the electrolyte solution increases. When the viscosity of the electrolyte solution in which Li is dissolved at the evaluation temperature of the cycle characteristics is 10 mPa·s or more, or 20 mPa·s or more, by setting the contact angles of both surface layers of the single-layer or multilayer separator with respect to propylene carbonate within a predetermined range, the effect of improving the cycle is remarkable. The contact angles of both surfaces of the separator with respect to propylene carbonate are 1° or more and 60° or less, and from the viewpoint of improving cycle characteristics, the lower limit value is more preferably 3° or more, and further preferably 5° or more, and the upper limit value is more preferably 55° or less, further preferably 50° or less, and particularly preferably 48° or less. Furthermore, it is more preferable that the affinity with the electrolyte solution be high not only in the separator surface layer but also in the interior (porous portion) of the active layer or the insulation layer.

The separator according to the present embodiment has an active layer containing a Li occluding material (A) and at least two insulation layers which do not include a Li occluding material (A), and the active layer is carried on an insulation layer. The separator has a laminate structure, more specifically a laminate structure in which an active layer containing a material (A) capable of occluding lithium is interposed between a plurality of insulation layers. In the claimed invention, the separator comprises a first and second insulation layer (I, **II)** and the active layer is interposed between the first insulation layer (I) and the second insulation layer **(II).** When the separator having this laminate structure is disposed in a electricity storage device, since the active layer containing the material (A) capable of occluding lithium is laminated as a so-called intermediate layer rather than an outermost layer of the separator, an insulation layer is present between the active layer and the electrode active material layer. Since the active layer containing the material (A) capable of occluding lithium is independently arranged from the charge/discharge circuit as an intermediate layer, it does not trap lithium at the time of charging of the device because it cannot accept electrons, and thus, does not interfere with the movement of lithium ions. Conversely, when the lithium dendrites grown from the electrode active material layer contact the active layer containing the material (A) capable of occluding lithium, the active layer traps the lithium dendrites due to potential difference. Thus, the laminate structure in which the active layer containing the material (A) capable of occluding lithium is interposed between a plurality of insulation layers tends to improve the safety and charge/discharge capacity.

In the present embodiment, the surface average pore number of at least one of the first and second insulation layers (I, II) is 15 pores/$\mu$m$^2$ or more, more preferably 40 pores/$\mu$m$^2$ or more, 60 pores/$\mu$m$^2$ or more, 80 pores/$\mu$m$^2$ or more, or 100 pores/$\mu$m$^2$ or more. Furthermore, the average pore number of at least one of the first and second insulation layers (I, II) is preferably 10 pores/$\mu$m$^2$ or more, and more preferably 50 pores/$\mu$m$^2$ or more, 60 pores/$\mu$m$^2$ or more, 70 pores/$\mu$m$^2$ or more, or 80 pores/$\mu$m$^2$ or more. Furthermore, the insulation layer preferably contains an insulating resin, and/or is preferably disposed as an outermost layer of the separator. When the surface average pore number of the insulation layer is 15 pores/$\mu$m$^2$ or more and/or the average pore number is 10 pores/$\mu$m$^2$ or more, the diffusion uniformity of lithium ions is improved, and even if dendrites are deposited during charging/discharging of the electricity storage device, the size, distribution, continuous or sequential growth, etc., of the dendrites are easily inhibited or controlled. Furthermore, in the nail penetration test of a lithium-ion secondary battery including the separator according to the present embodiment, the probability of the presence of a resin around the nail may increase when the nail penetrates. More specifically, at the start of heat generation due to nail penetration, the insulating resin derived from the insulation layer adheres to the nail, thereby increasing the electronic resistance of the portion of the nail to which the resin adheres and inhibiting a short-circuit current, whereby the amount of heat generated can be reduced. Furthermore, regarding the average pore number of at least one of the first and second insulation layers (I, II), from the viewpoint of compatibility between high output characteristics and dendrite resistance, the average surface pore number of the insulation layer can be 270 pores/$\mu$m$^2$ or less, 180 pores/$\mu$m$^2$ or less, 135 pores/$\mu$m$^2$ or less, or 130 pores/$\mu$m$^2$ or less. The average pore number of the insulation layer is preferably 300 pores/$\mu$m$^2$ or less, 200 pores/$\mu$m$^2$ or less, 160 pores/$\mu$m$^2$ or less, or 140 pores/$\mu$m$^2$ or less. Furthermore, adjusting the surface average pore number and/or the average pore number of the insulation layer within the above numerical ranges may contribute to the passing of safety tests such as the half-cell initial short-circuit test and the half-cell cycle characteristic test.

The constituent elements, production method, and physical properties of the separator according to the present embodiment will be described below.

<Separator Components>

The separator comprises the material (A) capable of occluding lithium. If desired, the separator may include a resin, an inorganic filler, and an organic filler in addition to the material (A) capable of occluding lithium.

<Material (A) Capable of Occluding Lithium (Li)>

As the Li occluding material (A), a compound capable of occluding lithium (Li) (including intercalation, alloying, chemical conversion, etc.), for example, a negative electrode active material of a lithium-ion secondary battery is used. Specifically, the lithium occluding material is at least one selected from the group consisting of silicon, silicon monoxide, lithium alloys (for example, alloys containing lithium metal, such as lithium-aluminum, lithium-lead, lithium-tin, lithium-aluminum-tin, lithium-gallium, and Wood's alloys), carbon materials (for example, graphite, hard carbon, low-temperature calcined carbon, and amorphous carbon), metal oxides, lithium metal oxides (for example, $Li_4Ti_5O_{12}$), polyphosphoric acid compounds, and sulfides of transition metals. Among these, it is preferred to use silicone, silicon monoxide, a lithium metal oxide (for example, $Li_4Ti_5O_{12}$), and metal oxides. Furthermore, the Li occluding material (A) may include a compound which reacts with lithium, such as a compound which is reduced and decomposed by lithium. By using such a material, it is possible to produce an electricity storage device which is excellent in safety, output, and cycle characteristics. Furthermore, from the viewpoint of Li occlusion capacity per volume, it is most preferable to use silicon and/or tin oxide because the growth of Li dendrites over long periods of time can be inhibited.

From the viewpoint of heat resistance and permeability, the shape of the Li occluding material (A) is preferably particulate, and from the viewpoint of dendrite inhibition, it is preferably flake-like, scale-like, plate-like, block-like, or spherical, and more preferably, is flake-like, scale-like, plate-like, or block-like.

When the Li occluding material (A) according to the present embodiment is in particulate form, the average particle diameter is preferably 0.01 $\mu$m or more, more preferably 0.05 $\mu$m or more, and further preferably 0.1 $\mu$m or more, and as an upper limit thereof, preferably 15.0 $\mu$m or less, more preferably 5.0 $\mu$m or less, and further preferably 3.0 $\mu$m or less. It is preferable to adjust the average particle diameter to 0.01 $\mu$m or more from the viewpoint of reducing the moisture content of the separator. Conversely, it is preferable to adjust the average particle diameter to 15.0 $\mu$m or less from the viewpoint of efficiently inhibiting lithium dendrite growth and reducing the heat shrinkage rate of the separator to reduce the likelihood of membrane breakage. Furthermore, it is preferable to adjust the average particle diameter to 3.0 $\mu$m or less from the viewpoint of favorably forming a porous layer having a small layer thickness and from the viewpoint of dispersibility of the inorganic filler in the porous layer.

From the viewpoint of balancing the safety, electrical characteristics, and cycle characteristics of the electricity storage device, the average particle diameter of the Li occluding material is preferably 1.5 times to 50.0 times, more preferably 3.0 times to 46.2 times, 5.0 times to 30.0 times, 10.0 times to 30.0 times, or 15.0 times to 30.0 times the average pore diameter of the insulation layer which does not contain the Li occluding material.

Note that as used herein, the average particle diameter of the material (A) capable of occluding lithium is a value measured in accordance with a method using SEM in the measurement method of the Examples described later.

<Inorganic Filler>

Examples of the inorganic filler include oxide-based ceramics such as alumina, silica, titania, zirconia, magnesia, ceria, yttria, zinc oxide, and iron oxide, nitride-based ceramics such as silicon nitride, titanium nitride, and boron nitride, ceramics such as silicon carbide, calcium carbonate, aluminum sulfate, aluminum hydroxide, aluminum hydroxide oxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, and silica sand, as well as glass fibers. These may be used alone or in combination of two or more. Among these, from the viewpoint of electrochemical stability, alumina, aluminum hydroxide, aluminum hydroxide oxide, aluminum silicate, barium sulfate, and zirconia are preferable, and aluminum silicate, barium sulfate, and zirconia are more preferably.

<Organic Filler>

Examples of the organic filler include various crosslinked polymer fine particles such as crosslinked polyacrylic acid, crosslinked polyacrylic ester, crosslinked polymethacrylic acid, crosslinked polymethacrylic ester, crosslinked polymethyl methacrylate, crosslinked polysilicone (such as polymethylsilsesquioxane), crosslinked polystyrene, crosslinked polydivinylbenzene, crosslinked styrene-divinylbenzene copolymers, polyimide, melamine resin, phenol resin, and benzoguanamine-formaldehyde condensates; and heat-resistant polymer fine particles such as polysulfone, polyacrylonitrile, aramid, polyacetal, and thermoplastic polyimide. Furthermore, the organic resin (polymer) constituting these organic fine particles may be a mixture, a modified product, a derivative, a copolymer (a random copolymer, an alternating copolymer, a block copolymer, or a graft copolymer) of the exemplified materials, or a crosslinked product (in the case of the heat-resistant polymer described above). Among these, the organic filler is preferably one or more resins selected from the group consisting of crosslinked polyacrylic acid, crosslinked polyacrylic ester, crosslinked polymethacrylic acid, crosslinked polymethacrylic ester, crosslinked polymethyl methacrylate, and crosslinked polysilicone (polymethylsilsesquioxane).

<Resin>

As the resin contained in the separator, a thermoplastic resin is preferable from the viewpoint of moldability as a thin layer porous layer or a high strength porous layer. Examples of the thermoplastic resin include:

polyolefins such as polyethylene or polypropylene;
fluorine-containing resins such as polyvinylidene fluoride or polytetrafluoroethylene;
fluorine-containing rubbers such as vinylidene fluoride-hexafluoropropylene copolymers or ethylene-tetrafluoroethylene copolymers;
rubbers such as styrene-butadiene copolymers and hydrides thereof, acrylonitrile-butadiene copolymers and hydrides thereof, acrylonitrile-butadiene-styrene copolymers and hydrides thereof, polymethacrylic acid, polyacrylic acid, methacrylic ester-acrylic ester copolymers, styrene-acrylic ester copolymers, acrylonitrile-acrylic ester copolymers, ethylene propylene rubber, polyvinyl alcohol, polyvinyl acetate, polyoxyethylene, polyoxypropylene, and ethylene-vinyl acetate copolymers; and
polyketones such as polyphenylene ethers, polysulfones, polyether sulfones, polyphenylene sulfides, polyetherimides, polyamideimides, polyamides, aromatic polyamides, polyesters, polycarbonates, polyethylene carbonates, polypropylene carbonates, polyacetals, poly(1-oxotrimethylene), and poly(1-oxo-2methyltrimethylene).

From the viewpoint of shutdown properties, a resin having a melting point and/or a glass transition temperature of less than 180 °C is preferable, and a polyolefin resin such as polyethylene or polypropylene is preferable. Furthermore, the polyolefin resin is preferably composed of polyethylene as a primary component from the viewpoint of ensuring shutdown at a lower temperature. From the viewpoint of inhibiting meltdown, a resin having a melting point and/or a glass transition temperature of 180 °C or more is preferable, and a polyphenylene sulfide, a polyamide, a polyamideimide, an aromatic polyamide, or poly(1-oxotrimethylene) is preferable. From the viewpoint of cycle characteristics, a resin having a good affinity with the electrolyte solution is preferable, and a fluororesin such as polyvinylidene fluoride, a vinylidene fluoride-hexafluoropropylene copolymer, a polyketone resin having a carbonyl group in the main skeleton such as poly(1-oxotrimethylene) and poly(1-oxo-2methyltrimethylene), a resin having an ether group in the main skeleton such as polyoxyether, a resin having an ester group in the main skeleton such as polymethacrylic acid, polyacrylic acid, a methacrylic ester-acrylic ester copolymer, or a resin having a carbonate group in the main skeleton such as polyethylene carbonate or polypropylene carbonate is preferable. These may be used alone or in combination of two or more.
Note that the lower limit of the viscosity average molecular weight of the polyolefin used in the resin is preferably 1,000 or more, more preferably 2,000 or more, and further preferably 5,000 or more from the viewpoint of molding processability, and the upper limit thereof is preferably less than 12,000,000, preferably less than 2,000,000, and further preferably less than 1,000,000.

<Layer (Active Layer) Containing Material (A) Capable of Occluding Lithium>

The active layer is a layer containing the material (A) capable of occluding lithium. When, **as in the** claimed **invention,** the active layer according to the present embodiment includes the material (A) capable of occluding lithium and a resin as described above, the content ratio (weight fraction) of the Li occluding material (A) and the resin in the active layer is preferably 10% or more, more preferably 30% or more, further preferably 50% or more, and particularly preferably 90% or more, and is preferably less than 100%, preferably 99.99% or less, more preferably 99.9% or less, and particularly preferably 99% or less as an upper limit from the viewpoint of the dendrite inhibition effect and the heat resistance.
As the resin contained in the active layer according to the present embodiment, a resin described as a separator component above can be used, and it is preferable that the resin contained in the active layer be capable of binding the Li occluding material (A), be insoluble in the electrolyte solution of the electricity storage device, and be electrochemically stable when the electricity storage device is used. Furthermore, from the viewpoint of controlling the contact angles of both surface layers of the separator with respect to propylene carbonate to 1° or more and 60° or less, a fluororesin such as polyvinylidene fluoride or a polyvinylidene chloride fluoride-hexafluoropropylene copolymer; a polyketone resin having a carbonyl group in a main skeleton such as poly(1-oxotrimethylene), and poly(1-oxo-2methyltrimethylene); a resin having an ether group in a main skeleton such as polyoxyether; a resin having an ester group in a main skeleton such as polymethacrylic acid, polyacrylic acid, or a methacrylic ester-acrylic ester copolymer; or a resin having a carbonate group in a main skeleton such as polyethylene carbonate or polypropylene carbonate is preferable. In order to control solubility in an electrolyte solution, it is also preferable to apply physical crosslinking and/or chemical crosslinking to the raw material resin or the separator containing the resin.

The ratio of the resin according to the present embodiment to the total amount of the material (A) capable of occluding lithium and the resin, from the viewpoint of the binding properties thereof, is preferably 0.5% or more, more preferably 1.0% or more, further preferably 3.0% or more, and most preferably 5.0% or more, and is preferably 80% or less, and more preferably 60% or less as an upper limit in terms of volume fraction. It is suitable to adjust the ratio to 0.5% or more from the viewpoint of sufficiently binding the Li occluding material (A) and reducing the likelihood of peeling and chipping (i.e., from the viewpoint of sufficiently ensuring suitable handleability). Conversely, it is preferable to adjust the ratio to 80% or less from the viewpoint of achieving suitable ion permeability of the separator.

The lower limit of the layer thickness of the active layer is preferably 0.5 $\mu$m or more, more preferably 2 $\mu$m or more, further preferably 3 $\mu$m or more, and particularly preferably 4 $\mu$m or more from the viewpoint of the dendrite inhibition effect and heat resistance improvement. The upper limit of the layer thickness is preferably 100 $\mu$m or less, more preferably 50 $\mu$m or less, further preferably 30 $\mu$m or less, particularly preferably 20 $\mu$m or less, and most preferably 10 $\mu$m or less from the viewpoint of high permeability or high capacity of the battery.

As the porosity of the active layer, it is preferable that the porosity of the active layer after expansion exceed 0% in consideration of the volume expansion rate at the time of Li occlusion of the Li occluding material (A). For example, when the volume expansion rate of the Li occluding material (A) is two-fold, the porosity of the active layer is preferably more than 50%, and when the volume expansion rate is three-fold, it is preferably 66% or more. From the viewpoint of increasing the occlusion capacity and inhibiting dendrite growth, the porosity is most preferably 99% or less, preferably 95% or less, and 90% or less.

<Insulation Layer>

In addition to the active layer containing the material (A) capable of occluding lithium, the separator according to the present embodiment contains first and second insulation layers which do not contain the material (A) capable of occluding lithium. The active layer is carried on the insulation layer. When, as in the claimed invention, the first and second insulation layers (I, **II**) which do not contain the material (A) capable of occluding lithium are included, the active layer containing the material (A) capable of occluding lithium is interposed between the first insulation layer (I) and the second insulation layer (II). Note that as used herein, an "insulation layer" means a layer capable of ensuring electrical insulation, and may be, for example, a layer having a planar-direction electrical resistivity of $10^7$ $\Omega$·cm or greater, or greater than $10^7$ $\Omega$·cm.

When, as in the claimed invention, the separator according to the present embodiment has a laminate structure, it is preferable that the insulation layer having a surface average pore number as described above and/or a surface average pore diameter as will be described later be arranged on the surface in contact with the negative electrode when constructing an electricity storage device. By arranging the insulation on the surface in contact with the negative electrode, the Li ion concentration gradient on the surface of the negative electrode is further eliminated, and the precipitation of Li dendrites tends to be inhibited.

The constituent material of the insulation layer preferably contains, as a primary component, a thermoplastic resin described as a separator component above, and more preferably contains a polyolefin. When the primary component of the insulation layer is a thermoplastic resin such as a polyolefin, it may be easy to control the moisture content to within the range of 2000 ppm or less. Herein, a material containing a specific component as a "primary component" means that the specific component is contained in an amount of 50% by weight or more based on the weight of the material.

The insulation layer is not particularly limited as long as it is a layer capable of ensuring electrical insulation, and examples thereof include a resin layer such as a polyolefin microporous membrane, an inorganic porous layer containing a resin which binds the inorganic particles and inorganic particles, and an organic filler layer containing a resin which binds the organic filler and organic filler.

Examples of such inorganic particles include oxide-based ceramics such as alumina, silica, titania, zirconia, magnesia, ceria, yttria, zinc oxide, and iron oxide; nitride-based ceramics such as silicon nitride, titanium nitride, and boron nitride; ceramics such as silicon carbide, calcium carbonate, aluminum sulfate, aluminum hydroxide, aluminum hydroxide oxide, potassium titanate, talc, kaolin clay, kaolinite, halloysite, pyrophyllite, montmorillonite, sericite, mica, amesite, bentonite, asbestos, zeolite, calcium silicate, magnesium silicate, diatomaceous earth, and silica sand; and glass fibers. These may be used alone or in combination of two or more. Among these, from the viewpoint of electrochemical stability, alumina, aluminum hydroxide, aluminum hydroxide oxide, aluminum silicate, barium sulfate, and zirconia are preferable, and aluminum silicate, barium sulfate, and zirconia are more preferable.

Examples of the organic filler include various crosslinked polymer fine particles such as crosslinked polyacrylic acid, crosslinked polyacrylic ester, crosslinked polymethacrylic acid, crosslinked polymethacrylic ester, crosslinked polymethyl methacrylate, crosslinked polysilicone (such as polymethylsilsesquioxane), crosslinked polystyrene, crosslinked polydivinylbenzene, crosslinked styrene-divinylbenzene copolymers, polyimide, melamine resins, phenol resins, and benzoguanamine-formaldehyde condensates; and heat-resistant polymer fine particles such as polysulfone, polyacrylonitrile, aramid, polyacetal, and thermoplastic polyimide. Furthermore, the organic resin (polymer) constituting these organic fine particles may be a mixture, a modified product, a derivative, a copolymer (a random copolymer, an alternating copolymer, a block copolymer, or a graft copolymer) of the exemplified materials, or a crosslinked product in the case of the heat-resistant polymer described above. Among these, the organic filler is preferably one or more resins selected from the group consisting of crosslinked polyacrylic acid, crosslinked polyacrylic ester, crosslinked polymethacrylic acid, crosslinked polymethacrylic ester, crosslinked polymethyl methacrylate, and crosslinked polysilicone (such as polymethylsilsesquioxane).

The shapes of the inorganic particles and the organic filler is not limited, but in particular, when the insulation layer contains inorganic particles, it is preferable from the viewpoint of heat resistance that they be scale-like, plate-like, or block-like.

Examples of the resin which binds the inorganic particles to each other or the organic filler to itself include the following 1) to 4):

    1) conjugated diene-based polymers,
    2) acrylic polymers,
    3) polyvinyl alcohol-based resins or cellulose polymers, and
    4) fluorine-containing resins.

The 1) conjugated diene-based polymer is a polymer containing a conjugated diene compound as a monomer unit. Conjugated diene compounds include, for example, 1,3-butadiene, 2-methyl-1,3-butadiene, 2,3-dimethyl-1,3-butadiene, 2-chloro-1,3-butadiene, styrene-butadiene, substituted linear conjugated pentadienes, and substituted side chain conjugated hexadienes, which may be used alone or in combination of two or more. Among these, 1,3-butadiene is preferable from the viewpoint of high binding property.

The 2) acrylic polymer is a polymer containing a (meth)acrylic compound as a monomer unit. The above (meth)acrylic compound denotes at least one selected from the group consisting of (meth)acrylic acid and (meth)acrylic ester.

Examples of such a compound include a compound represented by the following formula (P1):

$$CH_2 = CR^{Y1}\text{-}COO\text{-}R^{Y2} \qquad (P1)$$

where $R^{Y1}$ denotes a hydrogen atom or a methyl group, and $R^{Y2}$ denotes a hydrogen atom or a monovalent hydrocarbon group.

When $R^{Y2}$ is a monovalent hydrocarbon group, it may have a substituent and/or may have a heteroatom in the chain. Examples of the monovalent hydrocarbon group include a linear or branched chain alkyl group, a cycloalkyl group, and an aryl group.

Examples of the chain alkyl group, which is one type of $R^{Y2}$, include, more specifically, chain alkyl groups having from 1 to 3 carbon atoms, such as methyl, ethyl, n-propyl, and isopropyl groups; and chain alkyl groups having 4 or more carbon atoms, such as n-butyl, isobutyl, t-butyl, n-hexyl, 2-ethylhexyl, and lauryl groups. Furthermore, examples of the aryl group, which is one type of $R^{Y2}$, include a phenyl group.

Furthermore, examples of the substituent of the monovalent hydrocarbon group include a hydroxyl group and a phenyl group, and examples of the hetero atom in the chain include a halogen atom and an oxygen atom.

Examples of such a (meth)acrylic compound include (meth)acrylic acid, a chain alkyl (meth)acrylate, a cycloalkyl (meth)acrylate, a (meth)acrylate having a hydroxyl group, and a phenyl group-containing (meth)acrylate. The (meth)acrylic compounds are used alone or in combination of two or more.

Examples of the 3) polyvinyl alcohol-based resin include polyvinyl alcohol and polyvinyl acetate. Examples of the 3) cellulose polymer include carboxymethyl cellulose and carboxyethyl cellulose.

Examples of the 4) fluorine-containing resin include polyvinylidene fluoride, polytetrafluoroethylene, vinylidene fluoride-hexafluoropropylene copolymers, vinylidene fluoride-hexafluoropropylene-tetrafluoroethylene copolymers, and ethylene-tetrafluoroethylene copolymers.

To ensure the laminate structure of the separator having excellent safety or charge/discharge capacity, it is preferable that the insulation layer not contain the material (A) capable of occluding lithium. Specifically, the insulation layer may not contain any of the materials (A) described above. When the separator according to the present embodiment has a laminate structure composed of a plurality of layers, only the insulation layer located on the outermost surface in contact with the electrode may not contain the materials (A) described above. The separator of the claimed invention comprises first and second insulating layers (I, **II**) which do not contain a Li occluding material. The active layer is interposed between the first (I) and second (II) insulating layers.

When the separator according to the present embodiment has at least two insulation layers, and, as in the claimed invention, the two insulation layers interposing the active layer are the first and second insulation layers (I, II), the surface average pore diameter of at least one of the first and second insulation layers (I, **II**) is preferably 0.015 $\mu$m to 0.140 $\mu$m, more preferably 0.033 $\mu$m to 0.140 $\mu$m, 0.035 $\mu$m to 0.135 $\mu$m, or 0.040 $\mu$m to 0.100 $\mu$m from the viewpoint of both high output characteristics and dendrite inhibition. Furthermore, the average pore diameter of at least one of the first and second insulation layers (I, II) is preferably 0.01 $\mu$m to 0.15 $\mu$m, more preferably 0.03 $\mu$m to 0.15 $\mu$m, 0.035 $\mu$m to 0.14 $\mu$m, or 0.040 $\mu$m to 0.1 $\mu$m from the viewpoint of achieving both high output characteristics and dendrite inhibition. From a similar viewpoint, it is preferable that at least one of the first insulation layer (I) and the second insulation layer (II) comprise at least one selected from the group consisting of polyolefins, polyphenylene ethers, polysulfones, polyethersulfones, polyphenylene sulfides, polyetherimides, polyamideimides, polyamides, polyesters, and inorganic particles described above. Further, adjusting the average pore diameter of the insulation layer within the above numerical range may contribute to the passing of safety tests such as the half-cell initial short-circuit test and half-cell cycle characteristic test.

<Production Method and Physical Properties of Separator>

The method for the production of the separator according to the present embodiment is not particularly limited, and examples thereof include the following methods (i) to (iii):

(i) a method of obtaining a single-layer separator (not according to the invention as claimed) by molding a molding precursor comprising the Li occluding material (A) described above and, if desired, a resin described above by dispersion, heating, melt-kneading, extrusion, stretching, or relaxation;
(ii) a method of obtaining a separator having a laminate structure by dissolving or dispersing the Li occluding material (A) described above and, a resin described above in a solvent and applying the obtained dispersion onto at least one side of an insulation layer; and
(iii) a method of obtaining a separator having a laminate structure by heating and mixing the Li occluding material (A) and a resin together with a plasticizer with an extruder, co-extruding the mixture with the constituent materials of the insulation layers to form an extruded laminate sheet, subjecting the laminated sheet to stretching or plasticizer extraction and drying, or further applying an insulation layer to the surface of the active layer of the laminated structural separator of (ii) above.

It should be noted that the separator having a laminate structure can also be produced using a method different from the above-described production method. For example, a method such as bonding the insulation layer and the active layer by laminate processing can be appropriately combined.

As the solvent, a solvent in which the Li occluding material (A) and the resin can be uniformly and stably dissolved or dispersed is preferably used. Examples of such a solvent include N-methylpyrrolidone, N,N-dimethylformamide, N,N-dimethylacetamide, water, ethanol, toluene, hot xylene, and hexane.

Furthermore, in order to stabilize the resin solution containing the material (A) capable of occluding lithium or to improve applicability onto the insulation layer, various additives such as a surfactant or another dispersant, a thickener, a wetting agent, a defoaming agent, and a pH adjusting agent containing an acid or an alkali may be added to the dispersion of the Li occluding material (A). Though those which can be removed during solvent removal or plasticizer extraction are preferable, these additives may remain in the battery (or the separator in the battery) if they are electrochemically stable during use of the lithium-ion secondary battery, do not inhibit the battery reaction, and are stable to approximately 200 °C.

Examples of the method for dissolving or dispersing the Li occluding material (A) and resin in a solvent include a mechanical stirring method using a ball mill, bead mill, planetary ball mill, vibration ball mill, sand mill, colloid mill, attritor, roll mill, high-speed impeller disperser, disperser, homogenizer, high-speed impact mill, ultrasonic dispersion, or stirring blade.

The method of applying the dispersion of the Li occluding material (A) onto the surface of the insulation layer is not particularly limited as long as it is a method capable of achieving a predetermined layer thickness or coating area. Examples of such a coating method include a gravure coater method, small diameter gravure coater method, reverse roll coater method, transfer roll coater method, kiss coater method, dip coater method, knife coater method, air doctor coater method, blade coater method, rod coater method, squeeze coater method, cast coater method, die coater method, screen printing method, and spray coating method. Furthermore, in view of application, the dispersion may be applied only onto one side of the insulation layer or may be applied onto both sides, but it is preferable that the outermost surface in contact with the electrode be an insulation layer from the viewpoint of inhibiting short circuits due to dendrites and improving charge/discharge capacity.

It is preferable that the solvent be capable of being removed from the dispersion applied onto the insulation layer. The method of removing the solvent is not particularly limited as long as it does not adversely affect the insulation layer. Examples of the method of removing the solvent include a method of drying at a temperature lower than or equal to the melting point of the insulation layer during affixation of the insulation layer, a method of drying the insulation layer under reduced pressure at a temperature lower than the boiling point of the solvent, and a method of simultaneously extracting the solvent by immersing the insulation layer in a poor solvent to the resin to solidify the resin.

From the viewpoint of cycle characteristics of the electricity storage device and affinity with the electrolyte solution, an example of the method for the production of a multilayer separator having electrical resistivity, air permeability, contact angles of both surface layers of the active layer with respect to propylene carbonate as described above includes adding a resin having a good affinity with the electrolyte solution to the layer constituent material. Examples of resins having suitable affinity with the electrolyte solution include fluororesins such as polyvinylidene fluoride and vinylidene fluoride-hexafluoropropylene copolymers; polyketone (PK) resins having a carbonyl group in a main skeleton such as a poly(1-oxotrimethylene) and poly(1-oxo-2methyltrimethylene); resins having an ether group in the main skeleton such as a polyoxyether; resins having an ester group in the main skeleton such as polymethacrylic acid, polyacrylic acid, and methacrylic ester-acrylic ester copolymers; and resins having a carbonate group in the main skeleton such as polyethylene carbonate and polypropylene carbonate. Furthermore, when a microporous membrane composed of a polyolefin commonly used as the separator for lithium-ion batteries is used as the insulation layer, due to a method in which a carboxylic acid group or a hydroxyl group is introduced into the polyolefin structure by a treatment such as corona discharge treatment, plasma discharge treatment, or due to fluorine/oxygen mixed gas treatment or a known method such as coating or impregnating the surface of the microporous membrane composed of a polyolefin with a solution in which a resin having a high affinity with the electrolyte solution is dissolved or dispersed and drying or impregnating with a poor solvent, the solubility of the resin is reduced and the resin precipitates, whereby the electrolyte solution affinity of the surface or the interior (porous portion) of the polyolefin can be modified. Furthermore, the contact angles of the surface layers of the multilayer separator with respect to propylene carbonate can be adjusted by adding inorganic particles. The inorganic particles may be used as an additive, and the content of the inorganic particles in the layer may be adjusted to 50 wt% or more, or 70 wt% or more, as a primary component.

The membrane thickness (total layer thickness) of the single-layer, multilayer, or laminate separator is preferably 2 $\mu$m or more, more preferably 5 $\mu$m or more, further preferably 7 $\mu$m or more, and the upper limit thereof is preferably 200 $\mu$m or less, more preferably 100 $\mu$m or less, further preferably 50 $\mu$m or less, particularly preferably 30 $\mu$m or less, and most preferably 20 $\mu$m or less. Adjusting the membrane thickness to 2 $\mu$m or more is suitable from the viewpoint of sufficiently ensuring mechanical strength. Conversely, adjusting the membrane thickness to 200 $\mu$m or less is suitable from the viewpoint of increasing the capacity of the battery by enabling reduction in the occupied volume of the separator.

In the multilayer or laminate separator, the ratio of the layer thickness of the active layer to the thickness (total layer thickness) of the separator is preferably 10% or more, more preferably 20% or more, and is preferably 60% or less, more preferably 50% or less, as an upper limit. Adjusting this ratio to 10% or more is suitable from the viewpoint of increasing the dendrite inhibition effect and the short-circuit (short) temperature and achieving good heat resistance, and adjusting this ratio to 50% or less is suitable from the viewpoint of inhibiting a decrease in permeability of the separator.

In the multilayer or laminate separator, it is preferable that the peel strength between layers be 50 N/m or more. When the peel strength between layers is 50 N/m or more, the handling property when the separator is wound on a reel and when the electricity storage device is wound tends to be improved. Further, the heat shrinkage rate when the multilayer or the laminate separator is heated tends to be suitable because the layers adhere to each other with a peel strength of 50 N/m or more, whereby the heat shrinkage rate of the layer having high heat resistance is maintained. The peel strength between layers is more preferably 100 N/m or more, and further preferably 200 N/m or more.

For the single-layer (not according to the invention as claimed), multilayer, or laminate separator, the heat shrinkage rate at 150 °C or the heat shrinkage rate at 130 °C is preferably 0% or more and 15% or less, more preferably 0% or more and 10% or less, and particularly preferably 0% or more and 5% or less. It is preferable to adjust the heat shrinkage rate to 15% or less from the viewpoint of satisfactorily preventing membrane breakage of the separator at the time of abnormal heat generation of the electricity storage device and inhibiting contact between the positive and negative electrodes (i.e., from the viewpoint of achieving better safety properties). It is preferable to set the heat shrinkage rates in both the machine direction (MD) and the transverse direction (TD) of the separator within the above range. Furthermore, depending on the stretching conditions, the separator may shrink uniaxially and slightly extend uniaxially perpendicular thereto, and may exhibit a negative shrinkage rate. Since inhibiting shrinkage of the separator leads to inhibition of short-circuiting between the electrodes, it is important that the shrinkage rate be below a certain value, and the shrinkage rate may be a negative value.

The lower limit of the shutdown temperature of the single layer ( not according to the invention as claimed), multilayer, or laminate separator is preferably 120 °C or more, and the upper limit thereof is preferably 160 °C or less, more preferably 150 °C or less. Note that the shutdown temperature means the temperature at which the micropores of the separator are closed by heat melting when the electricity storage device generates abnormal heat. It is preferable to adjust the shutdown temperature to 160 °C or less from the viewpoint of rapidly promoting current blockage when the electricity storage device generates heat to obtain better safety properties. Conversely, it is preferable to adjust the shutdown temperature to 120 °C or higher from the viewpoint of enabling the use of the separator under a high temperature of, for example, approximately 100 °C, or from the viewpoint of enabling the separator to be subjected to various heat treatments.

The lower limit of the short temperature of the single layer (not according to the invention as claimed), multilayer, or laminate separator is preferably 180 °C or more, more preferably 200 °C or more, and the upper limit thereof is preferably 1000 °C or less. It is preferable to adjust the short temperature to 180 °C or more from the viewpoint of inhibiting contact between the positive and negative electrodes until heat is dissipated during abnormal heat generation of the electricity storage device to achieve better safety properties.

Note that the electrical resistivity of the active layer in the planar direction, the surface average pore number of the insulation layer, the surface average pore diameter, the average pore number and average pore diameter described above, as well as the air permeability, membrane thickness, heat shrinkage rate, shutdown temperature, and short temperature of the separator can be measured in accordance with the measurement methods of the Examples described later.

The voltage value at the time of short-circuiting in a withstand voltage measurement test of the single layer ( not according to the invention as claimed), multilayer, or laminate separator is preferably 0.3 kV to 4.5 kV, and more preferably 0.3 kV to 2.5 kV. When this voltage value is 0.3 kV or more, the defect rate of batteries due to short-circuiting can be reduced, when the voltage value is 4.5 kV or less, battery energy density can be improved.

<Electricity Storage Device>

The electricity storage device according to another embodiment of the present invention comprises a positive electrode, a separator as described above, a negative electrode, and if desired, an ion conducting medium. When the separator having a laminate structure has an insulation layer containing inorganic particles, it is preferable that the insulation layer containing inorganic particles be arranged so as to contact at least a part of the negative electrode surface of the electricity storage device from the viewpoint of rate characteristics and safety of the electricity storage device. Further, it is most preferable that the insulation layer containing inorganic particles and having a surface average pore number, average pore number, surface average pore diameter and average pore diameter within the above ranges be disposed so as contact the negative electrode surface. The ion conducting medium may be a liquid, gel, or solid depending on the electrolyte of the electricity storage device. Furthermore, from the viewpoint of high cycle properties and safety, the negative electrode potential (vs Li$^+$/Li) at the time of charging of the electricity storage device is preferably lower than the potential (vs Li$^+$/Li) of the material (A) capable of occluding lithium (Li) described above, and is more preferably 1.5V (vs Li$^+$/Li) or less.

The positive electrode, the negative electrode, and the separator are preferably arranged such that there is at least one insulation layer between the positive electrode and the separator and/or between the negative electrode and the separator from the viewpoint of safety, capacity characteristics, output characteristics, and cycle characteristics of the electricity storage device. Such an arrangement can also be achieved, for example, by the use of a separator having a laminate structure in which the active layer is interposed between a plurality of insulation layers, or by providing an insulation layer, described as a constituent element of the separator, separately from the separator between the electrode and the separator.

Specific examples of the electricity storage device include a lithium battery, a lithium secondary battery, a lithium-ion secondary battery, a sodium secondary battery, a sodium-ion secondary battery, a magnesium secondary battery, a magnesium-ion secondary battery, a calcium secondary battery, a calcium-ion secondary battery, an aluminum secondary battery, an aluminum-ion secondary battery, a nickel hydrogen battery, a nickel cadmium battery, an electric double layer capacitor, a lithium-ion capacitor, a redox flow battery, a lithium sulfur battery, a lithium air battery, a zinc air battery, and the like. Among these, from the viewpoint of practicality, a lithium battery, a lithium secondary battery, a lithium-ion secondary battery, a nickel hydrogen battery, or a lithium-ion capacitor is preferable, and a lithium battery or a lithium-ion secondary battery is more preferable.

In the case of a lithium battery, a lithium secondary battery, a lithium-ion secondary battery, or a lithium-ion capacitor, a lithium (Li)-ion conducting medium is preferable as the ion conducting medium.

For example, a electricity storage device can be produced by overlapping a positive electrode and a negative electrode via the separator according to the present embodiment, winding as necessary to form a laminate electrode body or a wound electrode body, and thereafter loading the laminate electrode body or wound electrode body into an outer casing, connecting the positive and negative electrodes with the positive and negative electrode terminals of the outer casing via a lead body, and sealing the outer casing after injecting the ion conducting medium into the outer casing. In the case of a lithium battery, a lithium secondary battery, a lithium-ion secondary battery, or a lithium-ion capacitor, the Li-ion conducting medium may be a non-aqueous electrolyte solution containing a non-aqueous solvent such as a chain or cyclic carbonate and an electrolyte such as a lithium salt, or may be a solid electrolyte or a gel electrolyte.

EXAMPLES

Next, the present embodiment will be described in more detail with reference to the Examples and the Comparative Examples Note that the physical properties in the Examples were measured by the following methods.

(1) Intrinsic Viscosity ($\eta$), Viscosity Average Molecular Weight (Mv)

Intrinsic viscosity [$\eta$] (dl/g) at 135 °C in a decalin solvent is determined based on ASTM-D4020. The Mv of polyethylene is calculated by the following formula.

$$[\eta] = 6.77 \times 10^{-4} \mathrm{Mv}^{0.67}$$

The Mv of polypropylene is calculated by the following formula.

$$[\eta] = 1.10 \times 10^{-4} \mathrm{Mv}^{0.80}$$

The intrinsic viscosity [$\eta$] (unit: dl/g) of polyketone is calculated by the following formula.

[Math 1]

$$[\eta] = \lim_{C \to 0} (T - t)/(t \cdot C) \qquad [\mathrm{d} \, l / \mathrm{g}]$$

where t is the flow time of hexafluoroisopropanol having a purity of 98% or more through a viscosity tube at 25 °C, T is the flow time of a dilute solution of polyketone dissolved in hexafluoroisopropanol through a viscosity tube at 25 °C, and C is the solute (i.e., polyketone) mass value in gram units in 100 ml of the above solution.

(2) Thickness ($\mu$m)

The membrane thickness of the sample is measured with a dial gauge (PEACOCK No.25™ manufactured by Ozaki Manufacturing Co., Ltd.). A sample of MD 10 mm $\times$ TD 10 mm is cut from a porous membrane, and the thicknesses of nine locations (3 points $\times$ 3 points) in a lattice-like manner are measured. The average value of the obtained measurements is calculated as the membrane thickness ($\mu$m) or the layer thickness.

Note that the thickness of each single layer obtained in the Examples and Comparative Examples is measured in a single-layer state as obtained in each production step. In the case of a laminate state, thickness is calculated by subtracting the values of the measured single layers. When a single layer cannot be obtained by coextrusion, the thickness of each layer is calculated from the cross-sectional SEM.

(3) Air Permeability (sec/100 ml)

Air permeability is measured using a JIS P-8117 compliant Gurley air permeability meter (G-B2™ manufactured by Toyo Seiki).

(4) Peel Strength (N/m)

Peel strength is measured using a tensile tester (autograft AG-IS) manufactured by Shimadzu Corporation in an ambient atmosphere at 25 °C.

The separator is cut to a size of 2.5 cm × 10 cm, and the surface of the substrate is affixed to a glass plate with double-sided tape (Nice Tack NWBB-15 manufactured by Nichiban Co., Ltd.), and Cellophane™ tape (Scotch 810-3-12) manufactured by 3M is adhered on the outer layer. Approximately 5 mm of the end of the adhered tape is peeled off, the tape side is attached to the upper side of the tensile tester (tensile side), the substrate side is attached to the lower side of the tensile tester (fixed side), and an integrated average load at a pull speed of 100 mm/min in a direction rotated by 180° with respect to the surface of the outer layer is applied to measure the peel strength.

(5) Porosity (%)

A 10 cm × 10 cm square sample is cut from a polyolefin microporous membrane, and the volume ($cm^3$) and mass (g) are obtained, and the following formula is calculated using these values and the true density ($g/cm^3$):

$$\text{Porosity (\%)} = (\text{volume} - (\text{mass} / \text{true density of mixed composition})) / \text{volume} \times 100$$

Note that the density of the mixed composition is calculated from the mixing ratio and the densities of the polyolefin resin and the inorganic particles used, and a value obtained by calculation is used.

(6) Surface Average Pore Diameter ($\mu$m), Surface Average Pore Number (pores/$\mu m^2$)

A 5 $\mu$m × 5 $\mu$m field of view captured with a scanning electron microscope (SEM) is read into the image analysis software ImageJ, Image-TyPe-8bit is selected, and the scale is adjusted with Analize-Set scale using scale bars within the SEM image. Subsequently, binarization is carried out by selecting Otsu as a condition in Image-Adjust-Threshold, and the Count calculated by Analyze-Particles is defined as the surface average pore number, and the Feret is set as the surface average pore diameter.

-    SEM capture conditions:

     S-4800: Manufactured by Hitachi
     Acceleration voltage: 1.5 kV
     Detector: LA-BSE (LA20)

-    Analyze-Particles conditions:

     Size ($\mu m^2$): 0.0004 - infinity
     Circularity: 0.00-1.00
     Exclude on edges: on
     Include holes: on

(7) Average Pore Diameter ($\mu$m), Pore Number (pores/$\mu m^2$)

It is known that the fluid inside of a capillary follows Knudsen flow when the mean free path of the fluid is larger than the pore diameter of the capillary, and Poiseuille flow when it is smaller. Thus, it is assumed that the air flow in the air permeability measurement of the microporous membrane follows Knudsen flow, and the water flow in the water permeability measurement of the microporous membrane follows Poiseuille flow.

The pore diameter d ($\mu$m) and the curvature $\tau$ (dimensionless) can be obtained from the air permeation rate constant $R_{gas}$ ($m^3/(m^2 \cdot sec \cdot Pa)$), the water permeation rate constant $R_{liq}$ ($m^3/(m^2 \cdot sec \cdot Pa)$), the air molecular velocity v (m/sec), the water viscosity $\eta$ (Pa·sec), the normal pressure $P_s$ (= 101325 Pa), the porosity $\varepsilon$ (%), and the membrane thickness L ($\mu$m) using the following formulas.

$$d = 2v \times (R_{liq} / R_{gas}) \times (16\,\eta / 3Ps) \times 10^6$$

$$\tau = (d \times (\varepsilon / 100) \times v / (3\,L \times P_s \times R_{gas}))^{1/2}$$

$R_{gas}$ is obtained from the air permeability (sec) using the following formula.

$$R_{gas} = 0.0001 / (\text{air permeability} \times (6.424 \times 10^{-4}) \times (0.01276 \times 101325))$$

Furthermore, $R_{liq}$ is obtained from the water permeability ($cm^3/(cm^2 \cdot sec \cdot Pa)$) using the following formula.

$$R_{liq} = \text{water permeability} / 100$$

Note that the water permeability is determined as follows. A microporous membrane previously immersed in alcohol is set in a stainless steel permeate cell having a diameter of 41 mm, the alcohol in the membrane is washed with water, and then the water permeates at a differential pressure of about 50000 Pa, and the amount of water permeated per unit time and unit pressure and unit area are calculated from the amount of water permeated ($cm^3$) after a time of 120 sec has elapsed, and this is used as the water permeability.

Furthermore, v is determined from the gas constant R (= 8.314), the absolute temperature T (K), the circumferential ratio $\pi$, and the average molecular weight M of air (= $2.896 \times 10^{-2}$ kg/mol) using the following formula.

$$\nu = ((8R \times T) / (\pi \times M))^{1/2}$$

Further, the pore number B (pores/$\mu m^2$) is obtained from the following formula.

$$B = 4 \times (\varepsilon / 100) / (\pi \times d^2 \times \tau)$$

Note that the average pore diameter and the pore number of the insulation layer (I) obtained in the Examples and Comparative Examples may be measured in a single-layer state as obtained in each production step.

Further, the method for measuring the average pore diameter and the pore number of the insulation layer (I) in the laminate separator is not particularly limited, and examples thereof include a method of peeling the layers with Cellophane™ tape and to obtain a single layer and measuring it, and a method of peeling the layers by applying an ultrasonic wave in a good solvent such that the binder of non-measurement layers is dissolved to obtain a single layer.

(8) Average Particle Diameter ($\mu m$)

After printing a 10 $\mu m$ × 10 $\mu m$ field of view magnified by a scanning electron microscope (SEM) directly or from a negative into a photograph, the average particle diameter ($\mu m$) is defined as the number average value of the circle-equivalent diameter (the diameter of a circle when the particles are converted into circles having the same area) read into the image analysis device and calculated therefrom. However, when the particle boundary is unclear when the photograph is input to the image analysis device, the photograph is traced and the image is input to the image analysis device using this drawing. Unless otherwise specified in the Examples, the "average particle diameter" is measured using a scanning electron microscope (SEM).

The circle-equivalent diameter is calculated using the smallest unit of particles that cannot be loosened further unless an excessive force is imparted thereto. For example, conventionally, the circle-equivalent diameter of a particle means the circle-equivalent diameter of a primary particle, but for particles that do not loosen unless excessive force is applied, such as granulated particles, it means the circle-equivalent diameter of a secondary particles. When a plurality of primary particles are connected by a weak force to form an amorphous structure, it means the circle-equivalent diameter of the primary particle diameter of the particles.

When it is difficult to determine the average particle diameter of the sample by SEM, measurement is carried out using a laser type particle size distribution measuring device. In this case, the sample is added to distilled water, and a small amount of an aqueous sodium hexametaphosphate solution is added and then dispersed in an ultrasonic homogenizer for 1 minute, and the particle size distribution is then measured using a laser type particle size distribution measuring device (Microtrack MT3300EX manufactured by Nikkiso Co., Ltd.), and the number average value of each particle can be obtained as the average particle diameter of the inorganic filler.

(9) Withstand Voltage

The separator is interposed by aluminum electrodes having a diameter of 4 cm, and a load of 15 g is applied thereto, and this is connecting to a withstand voltage measuring machine (TOS9201) made by Kikusui Electronics Corporation and measured. The average value of 50 measurement points is obtained as the measurement value of the sample. Regarding the measuring conditions, an AC voltage (60 Hz) is applied to the sample at a speed of 1.0 kV/sec, and the short-circuit voltage value is used as the withstand voltage of the separator (kV).

(10) Bulk Density of Inorganic Fillers (g/cm$^3$)

Heavy weight bulk density is measured in accordance with JIS R-9301-2-4.

(11) Resin Binder Volume Fraction (%)

The volume fraction (%) of the resin binder is calculated by the following formula.

$$Vb = \{(Wb / Db) / (Wb / Db + Wf / Df)\} \times 100$$

Vb: Volume fraction of resin binder (%)
Wb: Weight of resin binder (g)
Wf: Weight of inorganic filler (g)
Db: Density of resin binder (g/cm$^3$)
Df: Bulk density of inorganic filler (g/cm$^3$)

(12) MD Maximum Heat Shrinkage Stress (g), TD Maximum Heat Shrinkage Stress (g)

Heat shrinkage of the sample is measured using a TMA50™ manufactured by Shimadzu Corporation. When measuring the MD (TD) direction value, a sample cut out in the TD (MD) direction to a width of 3 mm is affixed to chucks so that the distance between the chucks is 10 mm, and is set on a dedicated probe. The initial load is 1.0 g and a constant length measurement mode is used, the sample is heated at a heating rate of 10 °C/min from 30 °C to 200 °C, the load (g) generated at that time is measured, and the maximum value thereof is set as the MD (or TD) maximum heat shrinkage stress (g).

(13) 150 °C Heat Shrinkage Rate, 130 °C Heat Shrinkage Rate

The separator is cut to 100 mm in the MD direction and 100 mm in the TD direction, and allowed to stand for 1 hour in an oven at a predetermined temperature (150 °C or 130 °C). At this time, the sample is interposed between two sheets of paper so that warm air does not directly hit the sample. After the sample is removed from the oven and cooled, the length (mm) is measured, and the MD and TD heat shrinkage rates are calculated by the following formulas.

$$\text{MD heat shrinkage rate (\%)} = \{(100 - \text{MD length after heating}) / 100\} \times 100$$

$$\text{TD heat shrinkage rate (\%)} = \{(100 - \text{TD length after heating}) / 100\} \times 100$$

(14) Electrical Resistivity

The separator is cut into strips measuring 11.0 cm in the MD direction and 0.50 cm in the TD direction, and the resistance thereof is measured using an LCR meter by applying the two terminals to two points on the surface of the active layer, the portion 0.5 cm in the MD direction and 0.25 mm in the TD direction and the portion 10.5 cm in the MD direction and 0.25 mm in the TD direction from the longitudinal ends of the strip.
Note that regarding a separator which cannot be measured in a state where the active layer is exposed, which is produced by three-layer coextrusion, it is possible to measure the resistance by peeling the surface layer with Cellophane™ tape or exposing the active layer by obliquely cutting from the surface using an oblique cutting device (SAICAS).
The electrical resistivity is calculated by the following formula.

Electrical resistivity ($\Omega \cdot$cm) = value measured with LCR meter ($\Omega$) $\times$ 0.5 (cm: TD direction width) $\times$ thickness of active layer (cm) / Distance between two terminals (cm)

Note that the thickness of the active layer is confirmed by cross-sectional SEM of the separator.

(15) Contact Angle with Respect to Propylene Carbonate

The contact angle is measured using a contact angle meter (CA-V) (model name) manufactured by Kyowa Interface Science Co., Ltd. On a slide glass, 2 $\mu$l of a propylene carbonate solution is dropped onto a surface of the separator, which is smoothly affixed so as not to wrinkle, and the contact angle after 40 seconds has elapsed is measured. Measurement is carried out in a 25 °C environment, and the average value of five measurements is used as the contact angle.

(16) Moisture Content

The separator is cut to within a range of 0.15 g to 0.20 g and pretreated for 12 hours at 23 °C and 40% relative humidity. Thereafter, the weight thereof is measured to obtain a sample weight (g). The moisture weight ($\mu$g) of the sample after pretreatment is measured using a Karl Fischer device. Note that the heating vaporization conditions at the time of measurement are 150 °C for 10 minutes. Furthermore, HYDRANAL Coulomat CG-K (SIGMA-ALDRICH) is used as the cathode reagent, and HYDRANAL Coulomat AK (SIGMA-ALDRICH) is used as the anode reagent. The moisture content is calculated according to the following formula.

$$\text{Moisture content (ppm)} = \text{moisture weight } (\mu g) \, / \, \text{sample weight (g)}$$

(17) Shutdown Temperature, Short Temperature

a. Positive Electrode Preparation

A slurry is prepared by dispersing 92.2% by weight of a lithium cobalt composite oxide ($LiCoO_2$) as a positive electrode active material, 2.3% by weight of each of scale-like graphite and acetylene black as a conductive material, and 3.2% by weight of polyvinylidene fluoride (PVDF) as a binder in N-methylpyrrolidone (NMP). This slurry is applied to one side of an aluminum foil having a thickness of 20 $\mu$m serving as a positive electrode current collector with a die coater, dried at 130 °C for 3 minutes, and compression-molded with a roll-press machine. At this time, the active substance coating amount of the positive electrode is 125 g/m$^2$, and thus, the bulk density of the active material is 3.00 g/cm$^3$.

b. Negative Electrode Preparation

A slurry is prepared by dispersing 96.6% by weight of artificial graphite as a negative electrode active material, 1.4% by weight of an ammonium salt of carboxymethyl cellulose as a binder, and 1.7% by weight of a styrene-butadiene copolymer latex in purified water. This slurry is applied to one side of a copper foil having a thickness of 12 $\mu$m serving as a negative electrode current collector with a die coater, dried at 120 °C for 3 minutes, and then compression-molded with a roll-press machine. At this time, the active substance coating amount of the negative electrode is 53 g/m$^2$, and thus, the bulk density of the active material is 1.35 g/cm$^3$.

c. Non-Aqueous Electrolyte solution

The non-aqueous electrolyte solution is prepared by dissolving $LiBF_4$ as a solute in a mixed solvent of propylene carbonate:ethylene carbonate:y-butyl lactone = 1:1:2 (by volume) so as to achieve a concentration of 1.0 mol/L.

d. Evaluation

The negative electrode cut to a size of 65 mm $\times$ 20 mm and immersed in a non-aqueous electrolyte solution for 1 minute or more is placed on a ceramic plate having a thermocouple connected thereto. A 9 $\mu$m thick aramid film cut to a size of 50 mm $\times$ 50 mm with a hole having a diameter of 16 mm in the center portion thereof is placed thereon. A porous membrane of a sample cut to a size of 40 mm $\times$ 40 mm and immersed in a non-aqueous electrolyte solution for 1 hour or more is placed thereon so as to cover the hole of an aramid film. The positive electrode cut to a size of 65 mm $\times$ 20 mm and immersed in a non-aqueous electrolyte solution for 1 minute or more is placed thereon so as not to contact the negative electrode, and a Kapton film and a silicone rubber having a thickness of approximately 4 mm is further placed on the positive electrode. After setting this on a hot plate, while applying a pressure of 4.1 MPa in a hydraulic press machine, the temperature is raised at a rate of 15 °C/min, and the change in impedance between the positive and negative electrodes at this time is measured from a set temperature of 25 °C to 200 °C under the condition of 1V AC and 1 kHz. In this measurement, the temperature at the time when the impedance reached 1000 $\Omega$ is set as

the shutdown temperature, and after the hole clogging state is reached, the temperature at the time when the impedance again dropped below 1000 $\Omega$ is set as the short temperature.

(18) Basic Battery Characterization

a. Positive Electrode Preparation

The positive electrode prepared in "a" of Section (17) is punched into a circular shape having an area of 2.00 cm$^2$.

b. Negative Electrode Preparation

The negative electrode prepared in "b" of Section (17) is punched into a circular shape having an area 2.05 cm$^2$.

c. Non-Aqueous Electrolyte Solution

The non-aqueous electrolyte solution is prepared by dissolving $LiPF_6$ as a solute in a mixed solvent of ethylene carbonate:ethyl methyl carbonate = 1:2 (by volume) so as to achieve a concentration of 1.0 mol/L.

d. Battery Assembly and Evaluation

The negative electrode, the separator, and the positive electrode are stacked in this order along the vertical direction from below so that the active material surfaces of the positive electrode and the negative electrode face each other, and are housed in a stainless metal casing with a lid. The casing and the lid are insulated, the casing is in contact with the copper foil of the negative electrode, and the lid is in contact with the aluminum foil of the positive electrode. The non-aqueous electrolyte solution prepared in "c" of Section (18) is injected into this casing and the casing is sealed.
Under a 25 °C atmosphere, the simple battery assembled as described above is charged for a total of approximately 12 hours by a method comprising charging to a battery voltage of 4.2 V at a current value of 0.3 mA (approximately 0.1 C) and thereafter throttling the current from 0.3 mA in order to maintain a voltage of 4.2 V, and discharged to a battery voltage of 3.0 V at a current value of 0.3 mA. The discharge capacity at this time is evaluated as the initial discharge capacity by the following criteria.

[Evaluation Ranking]

S: 150 mA/g or more
A: greater than 140 mA/g and less than 150 mA/g
B: 140 mA/g or less

Under a 60 °C atmosphere, charging is carried out for a total of approximately 3 hours by a method comprising charging to a battery voltage of 4.2 V at a current value of 3 mA (approximately 1.0 C) and thereafter throttling the current from 3 mA in order to maintain a voltage of 4.2 V, and discharging is carried out to a battery voltage of 3.0 V at a current value of 3 mA. This cycle is repeated.
The ratio of the discharge capacity after 300 cycles to the discharge capacity of the initial cycle is determined as the capacity retention rate (%), and the cycle characteristics are evaluated by the following criteria.

[Evaluation Ranking]

S: 50% or more
A: more than 30% and less than 50%
B: 30% or less

(19) Battery Safety Evaluation

<Dendrite Short-Circuit Test (A)>

A cell is prepared in the same manner as in Section (18), except that the positive electrode and the negative electrode of the cell prepared in Section (18) are changed to metallic lithium (Li).
Applying a current the cell using metallic Li in the positive and negative electrodes assembled as described above in the order of 2 mA/cm$^2$, 5 mA/cm$^2$, 10 mA/cm$^2$, 17 mA/cm$^2$, and 25 mA/cm$^2$ for 10 minutes, followed by a rest of 10 minutes is repeated, whereby dendrite accompanied by elution analysis of lithium (Li) is generated, and the voltage is monitored to confirm the current value at which a short circuit occurred. Note that the determination of short-circuiting is made when 10 or more discontinuous points where the voltage fluctuation is Δ0.025 V can be confirmed, or when the voltage becomes completely 0 V. The test results are evaluated according to the following criteria.

[Evaluation Ranking]

S: no short circuit
A: short circuit at 25 mA/cm$^2$
B: short circuit at 17 mA/cm$^2$
C: short circuit at 10 mA/cm$^2$
D: short circuit at 5 mA/cm$^2$
E: short circuit at 2 mA/cm$^2$

(Half-Cell Initial Short-Circuit Test)

A cell is prepared in the same manner as in Section (18), except that the negative electrode of the cell prepared in Section (18) is changed to metallic lithium (Li).
At a set current value of 0.1 C to the cell assembled as described above, a constant current at 4.3V (CC)-constant voltage (CV) charge (cut off condition: convergent current value of 0.03 mA) is carried out to measure the normal charge (i).
A new cell is produced separately from the cell the normal charge (i) of which is measured, and the overloaded rechargeable battery (ii) is measured by performing CC-CV charge (cut off condition: 25 mAh or convergent current value of 0.03 mA) at 4.3V at a set current value of 20mA/cm$^2$.
The value of (ii) - (i) is evaluated as the overcharge value due dendrite short-circuiting according to the following criteria.

[Evaluation Ranking]

S: less than 0.1 mAh
A: 0.1 mAh or more and less than 1.0 mAh
B: 1.0 mAh or more and less than 10.0 mAh
C: 10.0 mAh or more and 25.0 mAh or less

(Half-Cell Cycle Test)

A cell is prepared in the same manner as in Section (18), except that the negative electrode of the cell prepared in Section (18) is changed to metallic lithium (Li).
Under a 25 °C atmosphere, charging is carried out for a total of approximately 3 hours by a method comprising charging to a battery voltage of 4.3 V at a current value of 1.5 mA/cm$^2$ and thereafter throttling the current from 3 mA in order to maintain a voltage of 4.3 V, and discharging is carried out to a battery voltage of 3.0 V at a current value of 1.5 mA/cm$^2$. This cycle is repeated.
The ratio of the discharge capacity after 300 cycles to the discharge capacity of the initial cycle is determined as the capacity retention rate (%) and the cycle characteristics are evaluated by the following criteria.

[Evaluation Ranking]

S: 50% or greater
A: more than 30% and less than 50%
B: 30% or less

(20) Nail Penetration Test (A)

<Laminate Battery Preparation>

<Positive Electrode Preparation>

85 parts by weight of a mixed positive electrode active material obtained by mechanically mixing a lithium nickel manganese cobalt composite oxide powder ($LiNi_{1/3}Mn_{1/3}Co_{1/3}O_2$) as a positive electrode active material and a lithium manganese composite oxide powder ($LiMn_2O_4$) at a weight ratio of 70:30, 6 parts by weight of acetylene black as a conductive auxiliary agent, and 9 parts by weight of PVDF as a binder are mixed so as to be uniform using N-methyl-2-pyrrolidone (NMP) as a solvent to prepare a positive electrode mixture-containing paste. This positive electrode mixture-containing paste is uniformly applied to both surfaces of a current collector having a thickness of 20 $\mu$m composed of aluminum foil, dried, and then subjected to compression molding by a roll-press machine to adjust the thickness of the positive electrode mixture layer so that the total thickness became 130 $\mu$m to obtain a sheet.
A positive electrode sheet was prepared by setting an active-material-uncoated aluminum foil having a length of 20 mm as a lead tab on the upper part of the short side of a rectangular sheet having a short side of 95 mm and a long side of 120 mm.

<Negative Electrode Preparation>

91 parts by weight of graphite as a negative electrode active material and 9 parts by weight of PVDF as a binder are mixed so as to be uniform using NMP as a solvent to prepare a negative electrode mixture-containing paste. This negative electrode mixture-containing paste is uniformly applied to both surfaces of a current collector having a thickness of 15 $\mu$m composed of copper foil, dried, and then subjected to compression molding with a roll-press machine to adjust the thickness of the negative electrode mixture layer so that the total thickness became 130 $\mu$m to obtain a sheet.
A negative electrode sheet was prepared by setting an active-material-uncoated copper foil having a length of 20 mm as a lead tab on the upper part of the short side of a rectangular sheet having a short side of 95 mm and a long side of 120 mm.

<Non-Aqueous Electrolyte Solution Preparation>

The non-aqueous electrolyte solution is prepared by dissolving $LiPF_6$ as a solute in a mixed solvent of ethylene carbonate:ethyl methyl carbonate:dimethyl carbonate = 1: 1: 1 (by volume) as a non-aqueous electrolyte solution so as to achieve a concentration of 1.0 mol/L.

<Cell Preparation>

An electrode plate laminate is produced by alternately stacking three of positive electrode sheets described above and four negative electrode sheets described above, and separating each of them with a separator. The separator is a strip-shaped separator having a width of 125 mm, and the electrode plate laminate is produced by folding this in a zigzag manner.
After pressing the electrode plate laminate into a flat plate shape, it is housed in an aluminum laminate film, and three sides thereof are heat-sealed. Note that the positive electrode lead tab and the negative electrode lead tab are exposed from one side of the laminate film. Further, after drying, the non-aqueous electrolyte solution described above is injected into this casing, and the remaining side is sealed to prepare a laminate cell.

<Nail Penetration Test>

The laminate cell prepared as described above is charged at a constant current constant voltage (CCCV) for 3 hours under the conditions of current value of 0.3 A, a stop battery voltage of 4.2 V. Thereafter, the laminate cell is placed on an iron plate in an explosion-proof booth, and an iron nail having a diameter of 2.5 mm is penetrated into the central portion of the cell at a rate of 3 mm/sec under an environment of approximately 25 °C. The cell is visually observed and evaluated according to the following criteria.

[Evaluation Ranking]

S: no change
A: gas discharge
B: ignition

(21) Cycle Evaluation

a. Positive Electrode Preparation

A slurry is prepared by dispersing 92.2% by weight of a lithium cobalt composite oxide (LiCoO$_2$) as a positive electrode active material, 2.3% by weight of each of scale-like graphite and acetylene black as a conductive material, and 3.2% by weight of polyvinylidene fluoride (PVDF) as a binder in N-methylpyrrolidone (NMP). This slurry is applied onto one side of an aluminum foil having a thickness of 20 $\mu$m serving as a positive electrode current collector with a die coater, dried at 130 °C for 3 minutes, and compression-molded with a roll-press machine. At this time, the active substance coating amount of the positive electrode is 125 g/m$^2$, and thus, the bulk density of the active material is 3.00 g/cm$^3$. The prepared positive electrode is punched into a circular shape having an area 2.00 cm$^2$.

b. Negative Electrode Preparation

A 200 $\mu$m thick metallic lithium foil is punched into a circular shape having an area 2.05 cm$^2$ to serve as a negative electrode.

c. Non-Aqueous Electrolyte Solution

The non-aqueous electrolyte solution is prepared by dissolving LiPF$_6$ as a solute in a mixed solvent of ethylene carbonate:ethyl methyl carbonate = 1:2 (by volume) so as to achieve a concentration of 2.0 mol/L. The viscosity of the non-aqueous electrolyte solution at 25 °C is 17.6 mPa·s.

d. Battery Assembly and Conditioning

The negative electrode, the separator, and the positive electrode are stacked in this order along the vertical direction from below so that the active material surfaces of the positive electrode and the negative electrode face each other, and are housed in a stainless metal casing with a lid. The casing and the lid are insulated, and the casing is in contact with the lithium foil of the negative electrode and the lid is in contact with the aluminum foil of the positive electrode. The prepared non-aqueous electrolyte solution described above is injected into this casing and the casing is sealed.
After preparation of the simple battery assembled as described above, under a 25 °C atmosphere, the simple battery is initially charged for a total of approximately 12 hours by a method comprising charging to a battery voltage of 4.3 V at a current value of 0.3 mA (approximately 0.1 C) and thereafter throttling the current from 0.3 mA in order to maintain a voltage of 4.3 V, and discharged to a battery voltage of 3.0 V at a current value of 0.3 mA.

e. Cycle Evaluation

Under a 25 °C atmosphere, the conditioned simple battery is charged for a total of approximately 3 hours by a method comprising charging to a battery voltage of 4.3 V at a current value of 0.6 mA (approximately 0.2 C) and thereafter throttling the current from 0.6 mA in order to maintain a voltage of 4.3 V, and discharged to a battery voltage of 3.0 V at a current value of 3.0 mA (approximately 1 C). This cycle is repeated.
The ratio of the discharge capacity after cycles to the discharge capacity of the first cycle is determined as the capacity retention rate (%), and the cycle characteristics are evaluated by comparing the number of cycles in which the capacity retention rate reached 80%.

[Evaluation Ranking]

S: 250 cycles or more
A: 150 cycles or more and less than 250 cycles
B: 100 cycles or more and less than 150 cycles
C: less than 100 cycles

<Test Series I> (Examples 1 to 24 are not in accordance with the invention as claimed)

<Example 1>

45 parts by weight of a homopolymer high-density polyethylene having an Mv of 700000,
45 parts by weight of a homopolymer high-density polyethylene having an Mv of 300000, and
5 parts by weight of a homopolymer polypropylene having an Mv of 400000, were dry-blended in a tumbler blender.

To 99 parts by weight of the obtained polyolefin mixture, 1 part by weight of tetrakis-[methylene-(3',5'-di-t-butyl-4'-hydroxyphenyl)propionate]methane as an antioxidant was added, and this mixture was again dry-blended in a tumbler blender to obtain a mixture.

The resulting mixture was fed by a feeder into a twin screw extruder under a nitrogen atmosphere.

Liquid paraffin ($7.59 \times 10^{-5}$ $m^2$/s kinematic viscosity at 37.78 °C) was injected into the extruder cylinder with a plunger pump.

The operation conditions of the feeder and the pump were adjusted so that the proportion of liquid paraffin in 100 parts by weight of the total mixture to be extruded was 65 parts by weight and the polymer concentration was 35 parts by weight.

These were then melt-kneaded while being heated to 200 °C in a twin screw extruder, the obtained melt-kneaded product was extruded through a T-die onto a cooling roller controlled to a surface temperature of 80 °C, the extrudate was brought into contact with a cooling roller, and molded (cast) and cooled and solidified to obtain a sheet-like molded product having a thickness of 1170 $\mu$m.

This sheet was stretched in a simultaneous biaxial stretching machine at 122 °C to a magnification of MD 7-fold $\times$ TD 6.4-fold, and thereafter, the stretched product was immersed in methylene chloride to extract and remove the liquid paraffin and then dried. Thereafter, the sheet was laterally stretched to a magnification of 1.9-fold at 128 °C in a lateral stretching machine, followed by a relaxation heat treatment so as to achieve a magnification of 1.65-fold the width when ultimately introduced into the lateral stretching machine at 135 °C, whereby a polyolefin microporous membrane was obtained. The obtained polyolefin microporous membrane was used as the insulation layer (I). The cooling sheet thickness, simultaneous biaxial stretching temperature, lateral stretching multiplier and temperature, relaxation heat treatment magnification and temperature, etc. were adjusted, and the thickness, pore diameter, and pore number of the insulation layer obtained (I) were adjusted.

Thereafter, 90 parts by weight of silicon (average particle diameter: 1 $\mu$m), 10 parts by weight of acrylic polymer latex (solid concentration: 40%, average particle diameter: 145 nm, Tg = -10 °C), and 1.0 parts by weight of an aqueous solution of ammonium polycarboxylate (SN dispersant 5468 manufactured by San Nopco Ltd.) were uniformly dispersed in 100 parts by weight of water to prepare a coating liquid, and the coating liquid was applied onto the insulation layer (I) described above using a gravure coater. The coating layer on the insulation layer (I) was dried at 60 °C to remove the water, and a layer (active layer) containing the material (A) capable of occluding lithium and having a thickness of 5 $\mu$m was formed on the insulation layer (I) (insulation layer (I) + active layer).

Lastly, using a heat laminator, the laminate (insulation layer (I) + active layer) described above and the insulation layer (I) were overlapped and passed through a rubber roller set to 60 °C and 0.2 MPa to obtain a separator having a three-layer laminate structure.

<Example 2>

A first composition constituting the insulation layer (I) and the insulation layer (II) was prepared by mixing, as raw materials of the insulation layers (I) and (II), 95 parts by weight of a high-density polyethylene having an Mv of 300000, 5 parts by weight of polypropylene having an Mv of 400000, and 1 part by weight of tetrakis[methylene-3-(3',5'-di-t-butyl-4'-hydroxyphenyl)propionate]methane as an antioxidant.

A second composition constituting a layer (active layer) containing a material (A) capable of occluding lithium was prepared by premixing, as raw materials of the layer containing the material (A) capable of occluding lithium, 80 parts by weight of silicon (average particle diameter: 1 μm) and 20 parts by weight of a high-density polyethylene resin having an Mv of 700000 with 44.8 parts by weight of liquid paraffin as a plasticizer and 1 part by weight of tetrakis[methylene-3-(3',5'-di-t-butyl-4'-hydroxyphenyl)propionate]methane as an antioxidant in a Henschel mixer.

The first resin composition and the second resin composition were supplied to a twin screw extruder the two feed ports with a feeder under a nitrogen atmosphere. Liquid paraffin (7.59 × 10⁻⁵ m²/s kinematic viscosity at 37.78 °C) was also injected into the twin screw extruder cylinder with a plunger pump. The liquid paraffin was side-fed to the twin-screw extruder cylinder so that the plasticizer amount ratio in the total mixture extruded by melt-kneading the first resin composition was 55% by weight, and the plasticizer amount ratio in the total mixture extruded by melt-kneading the second resin composition was 60% by weight.

Next, the first and second resin compositions were melt-kneaded at 200 °C via a gear pump, conduit, and a T-die which is capable of two-type and three-layer coextrusion, which were set to a temperature of 200 °C, cooled on a roller having a surface temperature of 80 °C, and the insulation layer (I) and the insulation layer (II) consisting of the first composition served as the surface layer, and the sheet-like composition in which the active layer composed of the second composition served as an intermediate layer.

Next, the temperature and magnification of the sheet-like composition were continuously adjusted in a simultaneous biaxial stretching machine and stretched, and the stretched product was immersed in methylene chloride to extract and remove the liquid paraffin and then dried. Thereafter, lateral stretching and relaxation heat treatment of the obtained sheet were carried out to obtain a separator.

<Example 3>

Instead of performing heat-pressing by overlapping the final insulation layer (I) of Example 1, 96.0 parts by weight of a plate-like aluminum hydroxide oxide (average particle diameter: 1.0 μm), 4.0 parts by weight of an acrylic polymer latex (solid concentration: 40%, average particle diameter: 145 nm, Tg = -10 °C), and 1.0 parts by weight of an aqueous solution of ammonium polycarboxylate (SN dispersant 5468 manufactured by San Nopco Ltd.) were uniformly dispersed in 100 parts by weight of water to prepare a coating liquid, and the coating liquid was applied using a gravure coater onto the layer (active layer) containing the material capable of occluding lithium. The coating layer on the active layer was dried at 60 °C to remove the water, whereby a multilayer porous membrane in which an insulation layer (II) having a thickness of 5 μm was formed on the active layer was obtained. Note that a battery was prepared by facing the insulation layer (II) toward the negative electrode surface.

<Example 4>

A separator was obtained in the same manner as in Example 2, except that the materials of the active layer were adjusted to have the weight ratios described in Table 1, and the pore number and pore diameter were adjusted by adjusting the discharge amount, the stretching temperature, and the magnification.

<Examples 5 and 6>

A separator was obtained in the same manner as in Example 1, except that the thickness of the insulation layer was adjusted by adjusting the discharge amount and thickness of the cooling sheet.

<Examples 7 to 11>

Separators were obtained in the same manner as in Example 1, except that the pore number and pore diameter were adjusted by adjusting the discharge amount, the stretching temperature, and the magnification.

<Examples 12 and 13>

Separators were obtained in the same manner as in Example 10, except that the occluding material was changed to those described in Table 2 or 3.

<Example 14>

A separator was obtained in the same manner as in Example 3, except that the inorganic filler of the insulation layer (II) was changed to aluminum silicate (average particle diameter: 1.0 μm) having a plate-like shape.

<Example 15>

A separator was obtained in the same manner as in Example 3, except that the inorganic filler of the insulation layer (II) was changed to barium sulfate (average particle diameter: 1.0 $\mu$m) having a plate-like shape.

<Example 16>

A separator was obtained in the same manner as in Example 14, except that the shape of the inorganic filler of the insulation layer (II) was changed to a block-like shape (average particle diameter: 1.0 $\mu$m).

<Example 17>

A separator was obtained in the same manner as in Example 14, except that the shape of the inorganic filler of the insulation layer (II) was changed to a scale-like shape (average particle diameter: 3.0 $\mu$m).

<Example 18>

A mixture of NMP, PVDF, and graphite at a weight ratio of 50:6:1 was stirred for 10 hours to dissolve the PVDF in the NMP. The prepared paste was applied onto one side of the insulation layer (I) adjusted to the pore diameter and the pore number described in Table 3, and the PVDF was then solidified by immersing in water to remove the NMP to prepare a PVDF membrane containing graphite. When the polymer solidified, the pathways through which NMP escaped in the water became pores, whereby the formed membrane became a porous membrane having communication holes. After removing the moisture by vacuum drying the membrane for 10 hours at 65 °C, a coating membrane (insulation layer (I) + active layer) having a total thickness of 20 $\mu$m was obtained by pressing. Further, an insulation layer (I) adjusted to the pore diameter and pore number shown in Table 3 was attached to the other side of the active layer via a heat laminator (set to 60 °C and 0.2 MPa) and used as a separator.

<Examples 19 to 21>

Separators were obtained in the same manner as in Example 3, Example 8, and Example 10, except that the materials of the active layer were changed as described in Table 4.

<Examples 22 and 23>

Separators were obtained in the same manner as in Example 20, except that the pore diameter and the pore number of the insulation layers were changed as described in Table 4.

<Example 24>

A battery was prepared by facing the insulation layer (I) toward the negative electrode surface of Example 3.

<Test Series II>

<Comparative Examples 1 and 2>

In insulation layer in which the pore number and pore diameter of the substrate were adjusted as described in Table 5 was used as a separator.

<Comparative Example 3>

The active layer was adjusted in the same manner as in Example 2, except that the weight ratio of the flake-like graphite and the high-density polyethylene resin was adjusted to be 50:50, and the thickness was adjusted by adjusting the discharge amount, and the insulation layer was not extruded to obtain a single-layer separator having only an active layer.

<Example II-1> ( not in accordance with the invention as claimed)

A single-layer separator was obtained in the same manner as in Comparative Example 3, except that the material capable of occluding lithium was changed to silicon.

<Comparative Example 4>

A two-layer laminate separator was obtained in the same manner as in Example 1, except that the materials and weight ratio of the active layer were changed as described in Table 5, and the step of overlapping the insulation layer (I) and heat-laminating was omitted.
Note that a battery was produced by facing the active layer toward the negative electrode surface.

<Comparative Example 5>

Using the separator of Comparative Example 4, a battery was produced by facing the active layer toward the positive electrode surface.

<Examples II-2 and II-3> (not in accordance with the invention as claimed)

Separators were obtained in the same manner as in Comparative Example 4 and Comparative Example 5, except that the materials of the active layer were changed as described in Table 6.

<Comparative Example 6>

A separator was obtained in the same manner as in Example 18, except that the constituent material ratio of the active layer was adjusted to the values in Table 6.

<Comparative Example 7>

A separator was obtained in the same manner as in Example 7, except that the materials of the active layer were changed as described in Table 6.

[Table 1]

| | | Ex 1 | Ex 2 | Ex 3 | Ex 4 | Ex 5 | Ex 6 |
|---|---|---|---|---|---|---|---|
| Laminate Number | | Three-Layer Laminate | Three-Layer Laminate | Three-Layer Laminate | Three-Layer Laminate | Three-Layer Laminate | Three-Layer Laminate |
| A. Structure of Layer Including Material Capable of Occluding Lithium (Active Layer) | (1) Material (A) Capable of Occluding Lithium | Silicon | Silicon | Silicon | Silicon | Silicon | Silicon |
| | Shape of Material Capable of Occluding Lithium | Block-like | Block-like | Block-like | Block-like | Block-like | Block-like |
| | (2) Resin A | Acrylic | PE | Acrylic | PE | Acrylic | Acrylic |
| | Weight Ratio of (1):(2) | 90:10 | 80:20 | 90:10 | 60:40 | 90:10 | 90:10 |
| B. Structure of Insulation Layer (I) Not Including Material Capable of Occluding Lithium | (3) Inorganic Filler | | | | | | |
| | (4) Resin B | PE,PP | PE,PP | PE,PP | PE,PP | PE,PP | PE,PP |
| | Weight Ratio of (3):(4) | - | - | - | - | - | - |

(continued)

| | | Ex 1 | Ex 2 | Ex 3 | Ex 4 | Ex 5 | Ex 6 |
|---|---|---|---|---|---|---|---|
| C. Structure of Insulation Layer (II) Not Including Material Capable of Occluding Lithium | (5) Inorganic Filler | - | - | Aluminum Hydroxide Oxide | - | - | - |
| | Shape of Inorganic Filler | - | - | Plate-like | - | - | - |
| | (6) Resin C | PE,PP | PE,PP | Acrylic | PE,PP | PE,PP | PE,PP |
| | Weight Ratio of (5):(6) | - | - | 96:4 | - | - | - |
| Physical Characteristics of Separator | Electrical Resistivity of Active Layer ($\Omega \cdot$cm) | >100000 | >100000 | >100000 | >100000 | >100000 | >100000 |
| | Air Permeability of Separator (Laminated State) (s/100 mL) | 350 | 380 | 220 | 320 | 200 | 460 |
| | Withstand Voltage of Separator (Laminated State) (kV) | 1.9 | 2.2 | 1.9 | 2.4 | 0.8 | 3.4 |
| | Surface Average Pore Number of Insulation Layer (1) (pores/$\mu$m$^2$) | 65 | 75 | 65 | 80 | 65 | 65 |
| | Surface Average Pore Diameter of Insulation Layer (1) ($\mu$m) | 0.09 | 0.065 | 0.09 | 0.065 | 0.09 | 0.09 |
| | Average Pore Number of Insulation Layer (I) (pores/$\mu$m$^2$) | 60 | 70 | 60 | 80 | 60 | 60 |
| | Average Pore Diameter of Insulation Layer (1) ($\mu$m) | 0.1 | 0.065 | 0.1 | 0.065 | 0.1 | 0.1 |
| Thickness ($\mu$m) | Layer A | 5 | 5 | 5 | 5 | 5 | 5 |
| | Layer B | 10 | 10 | 10 | 10 | 3 | 15 |
| | Layer C | 10 | 10 | 5 | 10 | 3 | 15 |
| | Layer A Thickness% | 20 | 20 | 25 | 20 | 45 | 14 |

(continued)

|  | | Ex 1 | Ex 2 | Ex 3 | Ex 4 | Ex 5 | Ex 6 |
|---|---|---|---|---|---|---|---|
| Basic Battery Characteristics | Initial Discharge Capacity | S | S | s | s | s | s |
| | Cycle Characteristics | S | S | S | S | A | A |
| Battery Safety | Dendrite Short-Circuit Test (A) | S | A | S | A | A | S |
| | Nail Penetration Test (A) | S | S | S | S | S | S |
| Half-Cell Characteristics | Initial Short-Circuit Test | B | B | B | B | B | B |
| | Cycle Characteristics Evaluation | A | A | A | A | A | A |

[Table 2]

|  | | Ex 7 | Ex 8 | Ex 9 | Ex 10 | Ex 11 | Ex 12 |
|---|---|---|---|---|---|---|---|
| Laminate Number | | Three-Layer Laminate | Three-Layer Laminate | Three-Layer Laminate | Three-Layer Laminate | Three-Layer Laminate | Three-Layer Laminate |
| A. Structure of Layer Including Material Capable of Occluding Lithium (Active Layer) | (1) Material (A) Capable of Occluding Lithium | Silicon | Silicon | Silicon | Silicon | Silicon | Lithium Titanate |
| | Shape of Material Capable of Occluding Lithium | Block-like | Block-like | Block-like | Block-like | Block-like | Spherical |
| | (2) Resin A | Acrylic | Acrylic | Acrylic | Acrylic | Acrylic | Acrylic |
| | Weight Ratio of (1):(2) | 90:10 | 90:10 | 90:10 | 90:10 | 90:10 | 90:10 |
| B. Structure of Insulation Layer (1) Not Including Material Capable of Occluding Lithium | (3) Inorganic Filler | - | - | - | - | - | - |
| | (4) Resin B | PE,PP | PE,PP | PE,PP | PE,PP | PE,PP | PE,PP |
| | Weight Ratio of (3):(4) | - | - | - | - | - | - |
| C. Structure of Insulation Layer (II) Not Including Material Capable of Occluding Lithium | (5) Inorganic Filler | - | - | - | - | - | - |
| | Shape of Inorganic Filler | - | - | - | - | - | - |
| | (6) Resin C | PE,PP | PE,PP | PE,PP | PE,PP | PE,PP | PE,PP |
| | Weight Ratio of (5):(6) | - | - | - | - | - | - |

(continued)

| | | Ex 7 | Ex 8 | Ex 9 | Ex 10 | Ex 11 | Ex 12 |
|---|---|---|---|---|---|---|---|
| Physical Characteristics of Separator | Electrical Resistivity of Active Layer ($\Omega \cdot$cm) | >100000 | >100000 | >100000 | >100000 | >100000 | >100000 |
| | Air Permeability of Separator (Laminated State) (s/100 mL) | 200 | 200 | 180 | 380 | 310 | 380 |
| | Withstand Voltage of Separator (Laminated State) (kV) | 1.9 | 1.9 | 1.9 | 1.9 | 1.9 | 2.2 |
| | Surface Average Pore Number of Insulation Layer (1) (pores/$\mu$m$^2$) | 130 | 170 | 100 | 90 | 130 | 90 |
| | Surface Average Pore Diameter of Insulation Layer (1) ($\mu$m) | 0.065 | 0.045 | 0.09 | 0.065 | 0.055 | 0.065 |
| | Average Pore Number of Insulation Layer (I) (pores/$\mu$m$^2$) | 135 | 180 | 100 | 90 | 135 | 90 |
| | Average Pore Diameter of Insulation Layer (1) ($\mu$m) | 0.065 | 0.04 | 0.1 | 0.065 | 0.05 | 0.065 |
| Thickness ($\mu$m) | Layer A | 5 | 5 | 5 | 5 | 5 | 5 |
| | Layer B | 10 | 10 | 10 | 10 | 10 | 10 |
| | Layer C | 10 | 10 | 10 | 10 | 10 | 10 |
| | Layer A Thickness% | 20 | 20 | 20 | 20 | 20 | 20 |
| Basic Battery Characteristics | Initial Discharge Capacity | S | S | S | S | S | S |
| | Cycle Characteristics | S | S | A | S | S | S |
| Battery Safety | Dendrite Short-Circuit Test (A) | S | S | S | S | S | S |
| | Nail Penetration Test (A) | S | S | S | S | S | S |

(continued)

|  |  | Ex 7 | Ex 8 | Ex 9 | Ex 10 | Ex 11 | Ex 12 |
|---|---|---|---|---|---|---|---|
| Half-Cell Characteristics | Initial Short-Circuit Test | S | S | A | A | S | A |
|  | Cycle Characteristics Evaluation | S | S | S | S | S | S |

[Table 3]

|  |  | Ex 13 | Ex 14 | Ex 15 | Ex 16 | Ex 17 | Ex 18 |
|---|---|---|---|---|---|---|---|
| Laminate Number |  | Three-Layer Laminate | Three-Layer Laminate | Three-Layer Laminate | Three-Layer Laminate | Three-Layer Laminate | Three-Layer Laminate |
| A. Structure of Layer Including Material Capable of Occluding Lithium (Active Layer) | (1) Material (A) Capable of Occluding Lithium | Manganese Oxide | Silicon | Silicon | Silicon | Silicon | Graphite |
|  | Shape of Material Capable of Occluding Lithium | Spherical | Block-like | Block-like | Block-like | Block-like | Flake-like |
|  | (2) Resin A | Acrylic | Acrylic | Acrylic | Acrylic | Acrylic | PVDF |
|  | Weight Ratio of (1):(2) | 90:10 | 90:10 | 90:10 | 90:10 | 90:10 | 1:6 |
| B. Structure of Insulation Layer (1) Not Including Material Capable of Occluding Lithium | (3) Inorganic Filler | - | - | - | - | - | - |
|  | (4) Resin B | PE,PP | PE,PP | PE,PP | PE,PP | PE,PP | PE,PP |
|  | Weight Ratio of (3):(4) | - | - | - | - | - | - |
| C. Structure of Insulation Layer (II) Not Including Material Capable of Occluding Lithium | (5) Inorganic Filler | - | Aluminum Silicate | Barium Sulfate | Aluminum Silicate | Aluminum Silicate | - |
|  | Shape of Inorganic Filler | - | Plate-like | Plate-like | Block-like | Scale-like | - |
|  | (6) Resin C | PE,PP | Acrylic | Acrylic | Acrylic | Acrylic | PE,PP |
|  | Weight Ratio of (5):(6) | - | 96:4 | 96:4 | 96:4 | 96:4 | - |

(continued)

| | | Ex 13 | Ex 14 | Ex 15 | Ex 16 | Ex 17 | Ex 18 |
|---|---|---|---|---|---|---|---|
| Physical Characteristics of Separator | Electrical Resistivity of Active Layer ($\Omega \cdot$cm) | >100000 | >100000 | >100000 | >100000 | >100000 | >100000 |
| | Air Permeability of Separator (Laminated State) (s/100 mL) | 380 | 150 | 140 | 150 | 140 | 500 |
| | Withstand Voltage of Separator (Laminated State) (kV) | 2.2 | 1.9 | 1.9 | 1.9 | 1.9 | 2.6 |
| | Surface Average Pore Number of Insulation Layer (1) (pores/$\mu$m$^2$) | 90 | 65 | 65 | 65 | 65 | 40 |
| | Surface Average Pore Diameter of Insulation Layer (1) ($\mu$m) | 0.065 | 0.09 | 0.09 | 0.09 | 0.09 | 0.09 |
| | Average Pore Number of Insulation Layer (I) (pores/$\mu$m$^2$) | 90 | 60 | 60 | 60 | 60 | 30 |
| | Average Pore Diameter of Insulation Layer (I) ($\mu$m) | 0.065 | 0.1 | 0.1 | 0.1 | 0.1 | 0.1 |
| Thickness ($\mu$m) | Layer A | 5 | 5 | 5 | 5 | 5 | 10 |
| | Layer B | 10 | 10 | 10 | 10 | 10 | 10 |
| | Layer C | 10 | 5 | 5 | 5 | 5 | 10 |
| | Layer A Thickness% | 20 | 25 | 25 | 25 | 25 | 33 |
| Basic Battery Characteristics | Initial Discharge Capacity | S | S | S | S | S | A |
| | Cycle Characteristics | S | S | S | S | S | B |
| Battery Safety | Dendrite Short-Circuit Test (A) | S | S | S | S | S | S |
| | Nail Penetration Test (A) | S | S | S | S | S | A |

(continued)

|  |  | Ex 13 | Ex 14 | Ex 15 | Ex 16 | Ex 17 | Ex 18 |
|---|---|---|---|---|---|---|---|
| Half-Cell Characteristics | Initial Short-Circuit Test | A | B | B | B | B | B |
|  | Cycle Characteristics Evaluation | S | A | A | A | A | A |

[Table 4]

|  |  | Ex 19 | Ex 20 | Ex 21 | Ex 22 | Ex 23 | Ex 24 |
|---|---|---|---|---|---|---|---|
| Laminate Number | | Three-Layer Laminate | Three-Layer Laminate | Three-Layer Laminate | Three-Layer Laminate | Three-Layer Laminate | Three-Layer Laminate |
| A. Structure of Layer Including Material Capable of Occluding Lithium (Active Layer) | (1) Material (A) Capable of Occluding Lithium | Tin Oxide | Tin Oxide | Tin Oxide | Tin Oxide | Tin Oxide | Silicon |
|  | Shape of Material Capable of Occluding Lithium | Spherical | Spherical | Spherical | Spherical | Spherical | Block-like |
|  | (2) Resin A | Acrylic | Acrylic | Acrylic | Acrylic | Acrylic | Acrylic |
|  | Weight Ratio of (1):(2) | 90:10 | 90:10 | 90:10 | 90:10 | 90:10 | 90:10 |
| B. Structure of Insulation Layer (1) Not Including Material Capable of Occluding Lithium | (3) Inorganic Filler | - | - | - | - | - | - |
|  | (4) Resin B | PE,PP | PE,PP | PE,PP | PE,PP | PE,PP | PE,PP |
|  | Weight Ratio of (3):(4) | - | - | - | - | - | - |
| C. Structure of Insulation Layer (II) Not Including Material Capable of Occluding Lithium | (5) Inorganic Filler | Aluminum Hydroxide Oxide | - | - | - | - | Aluminum Hydroxide Oxide |
|  | Shape of Inorganic Filler | Plate-like | - | - | - | - | Plate-like |
|  | (6) Resin C | Acrylic | PE,PP | PE,PP | PE,PP | PE,PP | Acrylic |
|  | Weight Ratio of (5):(6) | 96:4 | - | - | - | - | 96:4 |

(continued)

| | | Ex 19 | Ex 20 | Ex 21 | Ex 22 | Ex 23 | Ex 24 |
|---|---|---|---|---|---|---|---|
| Physical Characteristics of Separator | Electrical Resistivity of Active Layer ($\Omega \cdot$cm) | >100000 | >100000 | >100000 | >100000 | >100000 | >100000 |
| | Air Permeability of Separator (Laminated State) (s/100 mL) | 200 | 180 | 360 | 190 | 170 | 220 |
| | Withstand Voltage of Separator (Laminated State) (kV) | 1.9 | 1.9 | 1.9 | 1.9 | 1.9 | 1.9 |
| | Surface Average Pore Number of Insulation Layer (I) (pores/$\mu$m$^2$) | 65 | 170 | 90 | 170 | 120 | 65 |
| | Surface Average Pore Diameter of Insulation Layer (I) ($\mu$m) | 0.09 | 0.045 | 0.065 | 0.045 | 0.65 | 0.09 |
| | Average Pore Number of Insulation Layer (I) (pores/$\mu$m$^2$) | 60 | 180 | 90 | 120 | 180 | 60 |
| | Average Pore Diameter of Insulation Layer (I) ($\mu$m) | 0.1 | 0.04 | 0.065 | 0.06 | 0.04 | 0.1 |
| Thickness ($\mu$m) | Layer A | 5 | 5 | 5 | 5 | 5 | 5 |
| | Layer B | 10 | 10 | 10 | 10 | 10 | 10 |
| | Layer C | 5 | 10 | 10 | 10 | 10 | 5 |
| | Layer A Thickness% | 25 | 20 | 20 | 20 | 20 | 25 |
| Basic Battery Characteristics | Initial Discharge Capacity | S | S | S | S | S | S |
| | Cycle Characteristics | S | S | S | S | S | S |
| Battery Safety | Dendrite Short-Circuit Test (A) | S | S | S | S | S | S |
| | Nail Penetration Test (A) | S | S | S | S | S | S |

(continued)

|  |  | Ex 19 | Ex 20 | Ex 21 | Ex 22 | Ex 23 | Ex 24 |
|---|---|---|---|---|---|---|---|
| Half-Cell Characteristics | Initial Short-Circuit Test | B | S | A | A | A | B |
|  | Cycle Characteristics Evaluation | A | S | S | S | S | B |

[Table 5]

|  |  | Comp Ex 1 | Comp Ex 2 | Comp Ex 3 | Ex II-1 * | Comp Ex 4 |
|---|---|---|---|---|---|---|
| Laminate Number | | Single-Layer | Single-Layer | Single-Layer | Single-Layer | Two-Layer Laminate |
| A. Structure of Layer Including Material Capable of Occluding Lithium (Active Layer) | (1) Material (A) Capable of Occluding Lithium | - | - | Graphite | Silicon | Graphite |
|  | Shape of Material Capable of Occluding Lithium | - | - | Flake-like | Block-like | Flake-like |
|  | (2) Resin A | - | - | PE | PE | Acrylic |
|  | Weight Ratio of (1):(2) | - | - | 50:50 | 50:50 | 90 10 |
| B. Structure of Insulation Layer (I) Not Including Material Capable of Occluding Lithium | (3) Inorganic Filler | - | - | - | - | - |
|  | (4) Resin B | PE,PP | PE,PP | - | - | PE,PP |
|  | Weight Ratio of (3):(4) | - | - | - | - | - |
| C. Structure of Insulation Layer (II) Not Including Material Capable of Occluding Lithium | (5) Inorganic Filler | - | - | - | - | - |
|  | Shape of Inorganic Filler | - | - | - | - | - |
|  | (6) Resin C | - | - | - | - | - |
|  | Weight Ratio of (5):(6) | - | - | - | - | - |

(continued)

| | | Comp Ex 1 | Comp Ex 2 | Comp Ex 3 | Ex II-1 * | Comp Ex 4 |
|---|---|---|---|---|---|---|
| Physical Characteristics of Separator | Electrical Resistivity of Active Layer ($\Omega \cdot$cm) | - | - | 10 | >100000 | 0.1 |
| | Air Permeability of Separator (Laminated State) (s/100 mL) | 150 | 680 | 130 | 130 | 200 |
| | Withstand Voltage of Separator (Laminated State) (kV) | 1.2 | 2 | 0.2 | 0.8 | 0.7 |
| | Surface Average Pore Number of Insulation Layer (I) (pores/$\mu$m$^2$) | 65 | 40 | - | - | 65 |
| | Surface Average Pore Diameter of Insulation Layer (I) ($\mu$m) | 0.09 | 0.09 | - | - | 0.09 |
| | Average Pore Number of Insulation Layer (I) (pores/$\mu$m$^2$) | 60 | 30 | - | - | 60 |
| | Average Pore Diameter of Insulation Layer (I) ($\mu$m) | 0.1 | 0.1 | - | - | 0.1 |
| Thickness ($\mu$m) | Layer A | - | - | 20 | 20 | 5 |
| | Layer B | 10 | 10 | - | - | 10 |
| | Layer C | - | - | - | - | - |
| | Layer A Thickness% | 0 | 0 | 100 | 100 | 33 |

(continued)

| | | Comp Ex 1 | Comp Ex 2 | Comp Ex 3 | Ex II-1 * | Comp Ex 4 |
|---|---|---|---|---|---|---|
| Basic Battery Characteristics | Initial Discharge Capacity | S | B | Not Measurable | B | A |
| | Cycle Characteristics | A | B | | B | A |
| Battery Safety | Dendrite Short-Circuit Test (A) | D | E | | D | C |
| | Nail Penetration Test (A) | B | A | | Not Measurable | B |
| Half-Cell Characteristics | Initial Short-Circuit Test | C | C | | c | c |
| | Cycle Characteristics Evaluation | B | B | | B | B |
| * not in accordance with the invention as claimed | | | | | | |

[Table 6]

| | | Comp Ex 5 | Ex II-2 * | Ex II-3 * | Comp Ex 6 | Comp Ex 7 |
|---|---|---|---|---|---|---|
| Laminate Number | | Two-Layer Laminate | Two-Layer Laminate | Two-Layer Laminate | Three-Layer Laminate | Three-Layer Laminate |
| A. Structure of Layer Including Material Capable of Occluding Lithium (Active Layer) | (1) Material (A) Capable of Occluding Lithium | Graphite | Silicon | Silicon | Graphite | Graphite |
| | Shape of Material Capable of Occluding Lithium | Flake-like | Block-like | Block-like | Flake-like | Flake-like |
| | (2) Resin A | Acrylic | Acrylic | Acrylic | PVDF | Acrylic |
| | Weight Ratio of (1): (2) | 90:10 | 90:10 | 90 10 | 90:10 | 90 10 |
| B. Structure of Insulation Layer (I) Not Including Material Capable of Occluding Lithium | (3) Inorganic Filler | - | - | - | - | - |
| | (4) Resin B | PE,PP | PE,PP | PE,PP | PE,PP | PE,PP |
| | Weight Ratio of (3): (4) | - | - | - | - | - |
| C. Structure of Insulation Layer (II) Not Including Material Capable of Occluding Lithium | (5) Inorganic Filler | - | - | - | - | - |
| | Shape of Inorganic Filler | - | - | - | - | - |
| | (6) Resin C | - | - | - | PE,PP | PE,PP |
| | Weight Ratio of (5): (6) | - | - | - | - | - |

(continued)

|  | | Comp Ex 5 | Ex II-2 * | Ex II-3 * | Comp Ex 6 | Comp Ex 7 |
|---|---|---|---|---|---|---|
| Physical Characteristics of Separator | Electrical Resistivity of Active Layer ($\Omega \cdot$cm) | 0.1 | >100000 | >100000 | 0.1 | 0.1 |
| | Air Permeability of Separator (Laminated State) (s/100 mL) | 200 | 200 | 200 | 340 | 180 |
| | Withstand Voltage of Separator (Laminated State) (kV) | 0.7 | 0.7 | 0.7 | 2 | 1.8 |
| | Surface Average Pore Number of Insulation Layer (I) (pores/$\mu$m$^2$) | 65 | 65 | 65 | 40 | 130 |
| | Surface Average Pore Diameter of Insulation Layer (I) ($\mu$m) | 0.09 | 0.09 | 0.09 | 0.09 | 0.065 |
| | Average Pore Number of Insulation Layer (I) (pores/$\mu$m$^2$) | 60 | 60 | 60 | 30 | 135 |
| | Average Pore Diameter of Insulation Layer (I) ($\mu$m) | 0.1 | 0.1 | 0.1 | 0.1 | 0.065 |
| Thickness ($\mu$m) | Layer A | 5 | 5 | 5 | 5 | 5 |
| | Layer B | 10 | 10 | 10 | 10 | 10 |
| | Layer C | - | - | - | 10 | 10 |
| | Layer A Thickness% | 33 | 33 | 33 | 20 | 20 |
| Basic Battery Characteristics | Initial Discharge Capacity | A | A | A | A | S |
| | Cycle Characteristics | S | A | S | B | S |
| Battery Safety | Dendrite Short-Circuit Test (A) | C | B | B | S | S |
| | Nail Penetration Test (A) | B | B | B | A | A |

(continued)

|  |  | Comp Ex 5 | Ex II-2 * | Ex II-3 * | Comp Ex 6 | Comp Ex 7 |
|---|---|---|---|---|---|---|
| Half-Cell Characteristics | Initial Short-Circuit Test | C | B | B | C | B |
|  | Cycle Characteristics Evaluation | B | B | B | B | B |
| * not in accordance with the invention as claimed | | | | | | |

<Test Series III>

<Example III-1>

45 parts by weight of a homopolymer high-density polyethylene having an Mv of 700000,
45 parts by weight of a homopolymer high-density polyethylene having an Mv of 300000,
5 parts by weight of homopolymer polypropylene having an Mv of 400000, were dry-blended in a tumbler blender.

To 99 parts by weight of the obtained polyolefin mixture, 1 part by weight of tetrakis-[methylene-(3',5'-di-t-butyl-4'-hydroxyphenyl)propionate]methane as an antioxidant was added, and the mixture was again dry-blended in the tumbler blender to obtain a mixture.
The resulting mixture was fed by a feeder into a twin screw extruder under a nitrogen atmosphere.
Liquid paraffin ($7.59 \times 10^{-5}$ $m^2$/s kinematic viscosity at 37.78 °C) was injected into the extruder cylinder with a plunger pump.
The operation conditions of the feeder and the pump were adjusted so that the proportion of liquid paraffin in 100 parts by weight of the total mixture to be extruded was 65 parts by weight and the polymer concentration was 35 parts by weight.
These were then melt-kneaded while being heated to 200 °C in a twin screw extruder, the obtained melt-kneaded product was extruded through a T-die onto a cooling roller controlled to a surface temperature of 80 °C, the extrudate was brought into contact with a cooling roller, and molded (cast) and cooled and solidified to obtain a sheet-like molded product having a thickness of 1170 $\mu$m.
This sheet was stretched in a simultaneous biaxial stretching machine at 122 °C to a magnification of MD 7-fold × TD 6.4-fold, and thereafter, the stretched product was immersed in methylene chloride to extract and remove the liquid paraffin and then dried. The sheet was laterally stretched to a magnification of 1.9-fold at 127 °C in a lateral stretching machine, followed by a relaxation heat treatment so as to achieve a magnification of 1.65-fold the width when ultimately introduced into the lateral stretching machine at 132 °C, whereby a polyolefin microporous membrane was obtained. The obtained polyolefin microporous membrane was placed in a reaction vessel made of stainless steel and sealed, and vacuum evacuation was carried out. The surface of the polyolefin microporous membrane and the interiors of the pores were treated by performing treatment at a partial pressure of fluorine gas of 1 Pa, an oxygen gas partial pressure of 120 kPa, and a temperature of 20 °C. The contact angle with respect to propylene carbonate was 40°. The polyolefin microporous membrane obtained after processing was used as the insulation layer (I).
Then, 90 parts by weight of silicon (average particle diameter: 1 $\mu$m), 10 parts by weight of acrylic polymer latex (solid concentration: 40%, average particle diameter: 145 nm, Tg = -10 °C), and 1.0 parts by weight of an aqueous solution of ammonium polycarboxylate (SN dispersant 5468 manufactured by San Nopco Ltd.) were uniformly dispersed in 100 parts by weight of water to prepare a coating liquid, and the coating liquid was applied onto the insulation layer (I) described above using a tabletop bar coater. The coating layer on the insulation layer (I) was dried at 60 °C to remove the water, and a layer (active layer) containing the material (A) capable of occluding lithium and having a thickness of 5 $\mu$m was formed on the insulation layer (I) (insulation layer (I) + active layer).
Lastly, using a heat laminator, the laminate (insulation layer (I) + active layer) described above and the insulation layer (I) were overlapped and passed through a rubber roller set to 60 °C and 0.2 MPa to obtain a separator having a three-layer laminate structure. The obtained characteristics are described in Table 7.

<Example III-2>

A separator having a three-layer structure was obtained in the same manner as in Example III-1, except that the treatment method of the polyolefin microporous membrane was changed to obtain an insulation layer (I). A method of treating the polyolefin microporous membrane was carried out as follows to prepare an insulation layer (I). Surface treatment was carried out on both surfaces using a tabletop corona treatment machine at a discharge amount of 80 W·min/m2 and a temperature of 25 °C. The contact angle with respect to propylene carbonate was 55°. The polyolefin microporous membrane obtained after processing was used as the insulation layer (I). The obtained characteristics are described in Table 7.

<Example III-3>

13.5 parts by weight of a homopolymer high-density polyethylene having an Mv of 700000,
13.5 parts by weight of a homopolymer high-density polyethylene having an Mv of 300000,
2.7 parts by weight of poly(1-oxotrimethylene) having an intrinsic viscosity [η] of 1.8,
70 parts by weight of liquid paraffin, and
0.3 parts by weight of tetrakis-[methylene-(3',5'-di-t-butyl-4'-hydroxyphenyl)propionate]methane as an antioxidant
were added to a vessel and stirred at room temperature to obtain a mixture.

The resulting mixture was melt-kneaded in a lab plastomill at 280 °C for 10 minutes. The obtained melt-kneaded product was flowed into a 700 μm-thickness mold, cooled to 25 °C, and pressed to obtain a sheet-like molded product having a thickness of 700 μm.

The sheet was stretched at 122 °C in a batch-type simultaneous biaxial stretching machine to a magnification of MD 7-fold × TD 7-fold. Thereafter, the stretched product was immersed in methylene chloride in a state in which four sides were affixed in a gold frame, and the liquid paraffin was extracted and removed, and the product was then dried. The obtained polyketone (PK)-added polyolefin microporous membrane was used as the insulation layer (I). The contact angle with respect to propylene carbonate was 52°.

90 parts by weight of silicon (average particle diameter: 1 μm), 10 parts by weight of acrylic polymer latex (solid concentration: 40%, average particle diameter: 145nm, Tg = -10 °C), and 1.0 parts by weight of an aqueous solution of ammonium polycarboxylate (SN dispersant 5468 manufactured by San Nopco Ltd.) were uniformly dispersed in 100 parts by weight of water to prepare a coating liquid, and the coating liquid was applied onto the insulation layer (I) described above using a tabletop bar coater. The coating layer on the insulation layer (I) was dried at 60 °C to remove the water, and a layer (active layer) containing the material (A) capable of occluding lithium and having a thickness of 5 μm was formed on the insulation layer (I) (insulation layer (I) + active layer).

An insulation layer (II) was then formed on the surface of the active layer obtained above. 96.0 parts by weight of aluminum hydroxide oxide (average particle diameter: 1.0 μm) having a plate-like shape and 4.0 parts by weight of an acrylic polymer latex (solid concentration: 40%, average particle diameter: 145 nm, Tg = -10 °C), and 1.0 parts by weight of an aqueous solution of ammonium polycarboxylate (SN dispersant 5468 manufactured by San Nopco Ltd.) were uniformly dispersed in 100 parts by weight of water to prepare a coating liquid, and the coating liquid was applied using a tabletop bar coater onto the layer (active layer) containing the material (A) capable of occluding lithium. The coating layer on the active layer was dried at 60 °C to remove the water, whereby a multilayer porous membrane in which an insulation layer (II) having a thickness of 5 μm was formed on the active layer was obtained. The contact angle of the insulation layer (II) with respect to propylene carbonate was 20°. The obtained characteristics are described in Table 7. Note that a battery was prepared by facing the insulation layer (II) toward the negative electrode surface.

<Example III-4> (not in accordance with the invention as claimed)

A separator having a three-layer laminate structure was obtained in the same manner as in Example III-1, except that the process for controlling the contact angle (treatment with fluorine gas or oxygen gas) was not carried out on the polyolefin microporous membrane. The contact angles of the surfaces of the insulation layers (I) and (II) with respect to propylene carbonate were 68°. The obtained characteristics are described in Table 7.

<Example III-5> (not in accordance with the invention as claimed)

The two-layer structure laminate including the insulation layer (I) + the active layer was prepared in the same manner as in Example III-4. The insulation layer (II) was prepared on the surface of the active layer in the same manner as in Example III-3. The obtained characteristics are described in Table 7. Note that a battery was prepared by facing the insulation layer (II) toward the negative electrode surface.

<Comparative Example III-1>

A battery was prepared and evaluated using a single-layer membrane composed of only an insulation layer (I) as prepared in Example III-1. The obtained characteristics are described in Table 7.

[Table 7]

| | | Ex III-1 | Ex III-2 | Ex III-3 | Ex III-4 * | Ex III-5 * | Comp Ex III-1 |
|---|---|---|---|---|---|---|---|
| Laminate Number | | Three-Layer Laminate | Three-Layer Laminate | Three-Layer Laminate | Three-Layer Laminate | Three-Layer Laminate | Single-Layer |
| A. Structure of Layer Including Material Capable of Occluding Lithium (Active Layer) | (1) Material (A) Capable of Occluding Lithium | Silicon | Silicon | Silicon | Silicon | Silicon | - |
| | Shape of Material Capable of Occluding Lithium | Block-like | Block-like | Block-like | Block-like | Block-like | - |
| | (2) Resin A | Acrylic | Acrylic | Acrylic | Acrylic | Acrylic | - |
| | Weight Ratio of (1):(2) | 90:10 | 90:10 | 90:10 | 90:10 | 90:10 | - |
| B. Structure of Insulation Layer (I) Not Including Material Capable of Occluding Lithium | (3) Inorganic Filler | - | - | - | - | - | - |
| | (4) Resin B | PE,PP | PE,PP | PE,PK | PE,PP | PE,PP | PE,PP |
| | Weight Ratio of (3):(4) | - | - | - | - | - | - |
| C. Structure of Insulation Layer (II) Not Including Material Capable of Occluding Lithium | (5) Inorganic Filler | - | - | Aluminum Hydroxide Oxide | - | Aluminum Hydroxide Oxide | - |
| | Shape of Inorganic Filler | - | - | Plate-like | - | Plate-like | - |
| | (6) Resin C | PE,PP | PE,PP | Acrylic | PE,PP | Acrylic | - |
| | Weight Ratio of (5):(6) | - | - | 96:4 | - | 96:4 | - |

(continued)

| | | Ex III-1 | Ex III-2 | Ex III-3 | Ex III-4 * | Ex III-5 * | Comp Ex III-1 |
|---|---|---|---|---|---|---|---|
| Physical Characteristics of Separator | Electrical Resistivity of Active Layer ($\Omega \cdot$cm) | >100000 | >100000 | >100000 | >100000 | >100000 | - |
| | Air Permeability of Separator (Laminated State) (s/100 mL) | 200 | 200 | 280 | 200 | 140 | 80 |
| | Withstand Voltage of Separator (Laminated State) (kV) | 1.9 | 1.9 | 2.2 | 2.1 | 1.6 | 0.8 |
| | Moisture Content of Separator (Laminated State) (ppm) | 800 | 800 | 1300 | 600 | 1300 | 100 |
| | Surface Average Pore Number of Insulation Layer (I) (pores/$\mu$m$^2$) | 130 | 130 | 130 | 130 | 130 | 130 |
| | Surface Average Pore Diameter of Insulation Layer (I) ($\mu$m) | 0.065 | 0.065 | 0.065 | 0.065 | 0.065 | 0.065 |
| | Average Pore Number of Insulation Layer (I) (pores/$\mu$m$^2$) | 135 | 135 | 135 | 135 | 135 | 135 |
| | Average Pore Diameter of Insulation Layer (I) ($\mu$m) | 0.065 | 0.065 | 0.065 | 0.065 | 0.065 | 0.065 |
| Thickness ($\mu$m) | Layer A | 5 | 5 | 5 | 5 | 5 | - |
| | Layer B | 10 | 10 | 14 | 10 | 10 | 10 |
| | Layer C | 10 | 10 | 5 | 10 | 5 | - |
| | Layer A Thickness% | 20 | 20 | 21 | 20 | 25 | 0 |

(continued)

| | | Ex III-1 | Ex III-2 | Ex III-3 | Ex III-4 * | Ex III-5 * | Comp Ex III-1 |
|---|---|---|---|---|---|---|---|
| Surface Contact Angle (degrees) | Insulation Layer (I) | 40 | 55 | 52 | 68 | 68 | 40 |
| | Insulation Layer (II) | 40 | 55 | 20 | 68 | 20 | - |
| Cycle Characteristics | Evaluation Rank | S | A | S | B | B | C |
| | Cycle Number | 300< | 190 | 280 | 120 | 140 | 70 |

| * not in accordance with the invention as claimed |
|---|

**Claims**

1. A separator for an electricity storage device, wherein the separator for an electricity storage device is a laminate separator for an electricity storage device comprising

   an active layer containing a lithium (Li) occluding material and a resin, and
   first and second insulation layers (I, II) which do not contain a Li occluding material,
   wherein
   the lithium occluding material is at least one selected from the group consisting of silicon, silicon monoxide, lithium alloys, carbon materials, metal oxides, lithium metal oxides, polyphosphoric acid compounds, and sulfides of transition metals,
   the active layer is carried on the insulation layer and is interposed between the first insulation layer (I) and the second insulation layer (II),
   an electrical resistivity of the active layer in a planar direction, determined as described in the description, is 100,000 Q.cm or more,
   a surface average pore number of the at least one insulation layer, determined as described in the description, is 15 pores/$\mu$m$^2$ or more,
   both surface layers of the separator have a contact angle, determined as described in the description, of 1° or more and 60° or less with respect to propylene carbonate, and
   the separator has an air permeability, determined as described in the description, of 650 s/100 ml or less.

2. The separator for an electricity storage device according to claim 1, wherein a surface average pore diameter of the at least one insulation layer, determined as described in the description, is 0.015 $\mu$m to 0.140 $\mu$m.

3. The separator for an electricity storage device according to claim 1 or 2, wherein an average pore number of the at least one insulation layer, determined as described in the description, is 10 pores/$\mu$m$^2$ or more.

4. The separator for an electricity storage device according to any one of claims 1 to 3, wherein an average pore diameter of the at least one insulation layer, determined as described in the description, is 0.01 $\mu$m to 0.15 $\mu$m.

5. The separator for an electricity storage device according to any one of claims 1 to 4, wherein a constituent material of the at least one insulation layer contains a polyolefin as a primary component.

6. The separator for an electricity storage device according to any one of claims 1 to 5, wherein a moisture content of the separator for an electricity storage device, determined as described in the description, is 0.1 ppm or more and 2000 ppm or less.

7. The separator for an electricity storage device according to any one of claims 1 to 6, wherein the at least one insulation layer contains inorganic particles.

8. The separator for an electricity storage device according to any one of claims 1 to 7, wherein an average particle diameter of the Li occluding material, determined as described in the description, is 1.5 to 50.0 times the average pore diameter, determined as described in the description, of the insulation layers.

9. The separator for an electricity storage device according to any one of claims 1 to 8, wherein the Li occluding material is particles, and an average particle diameter of the Li occluding material, determined as described in the description, is 0.01 $\mu$m to 5.00 $\mu$m.

10. The separator for an electricity storage device according to any one of claims 1 to 9, wherein in a withstand voltage measurement test of an electricity storage device comprising a positive electrode, the separator for an electricity storage device, a negative electrode, and an electrolyte solution, a voltage value when a short circuit occurs, determined as described in the description, is 0.3 kV to 4.5 kV.

11. An electricity storage device, comprising a positive electrode, the separator for an electricity storage device according to any one of claims 1 to 10, a negative electrode, and an electrolyte solution.

12. An electricity storage device, comprising a positive electrode, the separator for an electricity storage device according to any one of claims 1 to 10, a negative electrode, and a lithium (Li)-ion conducting medium, wherein the lithium (Li)-ion conducting medium is gel-like or solid.

**Patentansprüche**

1. Separator für Stromspeichervorrichtung, wobei der Separator für die Stromspeichervorrichtung ein Laminatseparator für eine Stromspeichervorrichtung ist, umfassend

eine aktive Schicht, die ein Lithium(Li)-okkludierendes Material und ein Harz enthält, und
eine erste und eine zweite Isolationsschicht (I, II), die kein Li-okkludierendes Material enthalten, wobei
das lithiumokkludierende Material wenigstens eines ist, das aus der Gruppe ausgewählt ist, die aus Silicium, Siliciummonoxid, Lithiumlegierungen, Kohlenstoffmaterialien, Metalloxiden, Lithiummetalloxiden, Polyphosphorsäureverbindungen und Sulfiden von Übergangsmetallen besteht,
die aktive Schicht auf der Isolationsschicht geträgert ist und sich zwischen der ersten Isolationsschicht (I) und der zweiten Isolationsschicht (II) befindet,
der spezifische Widerstand der aktiven Schicht in planarer Richtung, der so bestimmt wird, wie es in der Beschreibung beschrieben ist, 100000 $\Omega \cdot$cm oder mehr beträgt,
das Flächenmittel der Porenzahl der wenigstens einen Isolationsschicht, das so bestimmt wird, wie es in der Beschreibung beschrieben ist, 15 Poren/$\mu$m$^2$ oder mehr beträgt,
beide Oberflächenschichten des Separators einen Kontaktwinkel, der so bestimmt wird, wie es in der Beschreibung beschrieben ist, von 1° oder mehr und 60° oder weniger in Bezug auf Propylencarbonat aufweisen und
der Separator eine Luftdurchlässigkeit, die so bestimmt wird, wie es in der Beschreibung beschrieben ist, von 650 s/100 ml oder weniger aufweist.

2. Separator für eine Stromspeichervorrichtung gemäß Anspruch 1, wobei das Flächenmittel des Porendurchmessers der wenigstens einen Isolationsschicht, das so bestimmt wird, wie es in der Beschreibung beschrieben ist, 0,015 $\mu$m bis 0,140 $\mu$m beträgt.

3. Separator für eine Stromspeichervorrichtung gemäß Anspruch 1 oder 2, wobei die mittlere Porenzahl der wenigstens einen Isolationsschicht, die so bestimmt wird, wie es in der Beschreibung beschrieben ist, 10 Poren/$\mu$m$^2$ oder mehr beträgt.

4. Separator für eine Stromspeichervorrichtung gemäß einem der Ansprüche 1 bis 3, wobei der mittlere Porendurchmesser der wenigstens einen Isolationsschicht, der so bestimmt wird, wie es in der Beschreibung beschrieben ist, 0,01 $\mu$m bis 0,15 $\mu$m beträgt.

5. Separator für eine Stromspeichervorrichtung gemäß einem der Ansprüche 1 bis 4, wobei ein konstituierendes Material der wenigstens einen Isolationsschicht ein Polyolefin als primäre Komponente enthält.

**6.** Separator für eine Stromspeichervorrichtung gemäß einem der Ansprüche 1 bis 5, wobei der Feuchtigkeitsgehalt des Separators für eine Stromspeichervorrichtung, der so bestimmt wird, wie es in der Beschreibung beschrieben ist, 0,1 ppm oder mehr und 2000 ppm oder weniger beträgt.

**7.** Separator für eine Stromspeichervorrichtung gemäß einem der Ansprüche 1 bis 6, wobei die wenigstens eine Isolationsschicht anorganische Teilchen enthält.

**8.** Separator für eine Stromspeichervorrichtung gemäß einem der Ansprüche 1 bis 7, wobei der mittlere Teilchendurchmesser des Li-okkludierenden Materials, der so bestimmt wird, wie es in der Beschreibung beschrieben ist, das 1,5- bis 50,0-fache des mittleren Porendurchmessers, der so bestimmt wird, wie es in der Beschreibung beschrieben ist, der Isolationsschichten beträgt.

**9.** Separator für eine Stromspeichervorrichtung gemäß einem der Ansprüche 1 bis 8, wobei es sich bei dem Li-okkludierenden Material um Teilchen handelt und der mittlere Teilchendurchmesser des Li-okkludierenden Materials, der so bestimmt wird, wie es in der Beschreibung beschrieben ist, 0,01 $\mu$m bis 5,00 $\mu$m beträgt.

**10.** Separator für eine Stromspeichervorrichtung gemäß einem der Ansprüche 1 bis 9, wobei in einem Stehspannungsmesstest einer Stromspeichervorrichtung, die eine positive Elektrode, den Separator für eine Stromspeichervorrichtung, eine negative Elektrode und eine Elektrolytlösung umfasst, der Spannungswert bei Auftreten eines Kurzschlusses, der so bestimmt wird, wie es in der Beschreibung beschrieben ist, 0,3 kV bis 4,5 kV beträgt.

**11.** Stromspeichervorrichtung, umfassend eine positive Elektrode, den Separator für eine Stromspeichervorrichtung gemäß einem der Ansprüche 1 bis 10, eine negative Elektrode und eine Elektrolytlösung.

**12.** Stromspeichervorrichtung, umfassend eine positive Elektrode, den Separator für eine Stromspeichervorrichtung gemäß einem der Ansprüche 1 bis 10, eine negative Elektrode und ein Lithium(Li)ionenleitendes Medium, wobei das Lithium(Li)ionenleitende Medium gelartig oder fest ist.


**Revendications**

**1.** Séparateur pour un dispositif de stockage d'électricité, le séparateur pour un dispositif de stockage d'électricité étant un séparateur stratifié pour un dispositif de stockage d'électricité comprenant

une couche active contenant un matériau d'occlusion à base de lithium (Li) et une résine, et
des première et deuxième couches isolantes (I, II) qui ne contiennent pas de matériau occlusif à base de Li, dans lequel
le matériau d'occlusion à base de lithium est au moins l'un choisi dans le groupe constitué du silicium, du monoxyde de silicium, d'alliages de lithium, de matériaux à base de carbone, d'oxydes métalliques, d'oxydes métalliques de lithium, de composés d'acide polyphosphorique et de sulfures de métaux de transition,
la couche active est portée par la couche isolante et est intercalée entre la première couche isolante (I) et la deuxième couche isolante (II), une résistivité électrique de la couche active dans une direction plane, déterminée comme décrit dans la description, est supérieure ou égale à 100 000 $\Omega \cdot$cm,
un nombre moyen de pores de surface de la ou des couches isolantes, déterminé comme décrit dans la description, est supérieur ou égal à 15 pores/$\mu$m$^2$,
les deux couches de surface du séparateur ont un angle de contact, déterminé comme décrit dans la description, de 1° ou plus et de 60° ou moins par rapport au carbonate de propylène, et
le séparateur a une perméabilité à l'air, déterminée comme décrit dans la description, inférieure ou égale à 650 s/100 ml.

**2.** Séparateur pour un dispositif de stockage d'électricité selon la revendication 1, dans lequel un diamètre moyen des pores de surface de la ou des couches isolantes, déterminé comme décrit dans la description, est de 0,015 $\mu$m à 0,140 $\mu$m.

**3.** Séparateur pour un dispositif de stockage d'électricité selon la revendication 1 ou 2, dans lequel un nombre moyen de pores de la ou des couches isolantes, déterminé comme décrit dans la description, est supérieur ou égal à 10 pores/$\mu$m$^2$.

**4.** Séparateur pour un dispositif de stockage d'électricité selon l'une quelconque des revendications 1 à 3, dans lequel un diamètre de pore moyen de la ou des couches isolantes, déterminé comme décrit dans la description, est de 0,01 $\mu$m à 0,15 $\mu$m.

**5.** Séparateur pour un dispositif de stockage d'électricité selon l'une quelconque des revendications 1 à 4, dans lequel un matériau constitutif de la ou des couches isolantes contient une polyoléfine en tant que composant principal.

**6.** Séparateur pour un dispositif de stockage d'électricité selon l'une quelconque des revendications 1 à 5, dans lequel une teneur en humidité du séparateur pour un dispositif de stockage d'électricité, déterminée comme décrit dans la description, est supérieure ou égale à 0,1 ppm et inférieure ou égale à 2000 ppm.

**7.** Séparateur pour un dispositif de stockage d'électricité selon l'une quelconque des revendications 1 à 6, dans lequel la ou les couches isolantes contiennent des particules inorganiques.

**8.** Séparateur pour un dispositif de stockage d'électricité selon l'une quelconque des revendications 1 à 7, dans lequel un diamètre de particule moyen du matériau d'occlusion à base de Li, déterminé comme décrit dans la description, est de 1,5 à 50,0 fois le diamètre de pore moyen, déterminé comme décrit dans la description, des couches isolantes.

**9.** Séparateur pour un dispositif de stockage d'électricité selon l'une quelconque des revendications 1 à 8, dans lequel le matériau d'occlusion à base de Li est constitué de particules, et un diamètre de particule moyen du matériau d'occlusion à base de Li, déterminé comme décrit dans la description, est de 0,01 $\mu$m à 5,00 $\mu$m.

**10.** Séparateur pour un dispositif de stockage d'électricité selon l'une quelconque des revendications 1 à 9, dans lequel, lors d'un essai de mesure de tension de tenue d'un dispositif de stockage d'électricité comprenant une électrode positive, le séparateur pour un dispositif de stockage d'électricité, une électrode négative et une solution d'électrolyte, une valeur de tension lorsqu'un court-circuit se produit, déterminée comme décrit dans la description, est de 0,3 kV à 4,5 kV.

**11.** Dispositif de stockage d'électricité, comprenant une électrode positive, le séparateur pour un dispositif de stockage d'électricité selon l'une quelconque des revendications 1 à 10, une électrode négative et une solution d'électrolyte.

**12.** Dispositif de stockage d'électricité, comprenant une électrode positive, le séparateur pour un dispositif de stockage d'électricité selon l'une quelconque des revendications 1 à 10, une électrode négative et un milieu conducteur d'ions lithium (Li), le milieu conducteur d'ions lithium (Li) étant de type gel ou solide.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019123325 A1
- EP 3716359 A1
- JP 2016181357 A
- JP 4961654 B
- WO 2001063687 A
- JP 2010219012 A
- JP 2013109866 A